# EUROPEAN PATENT APPLICATION

(11) **EP 4 819 735 A1**
(43) Date of publication of application: **07.10.2026**
(21) Application number: 24896405.8
(22) Date of filing: 21.11.2024
(51) Int. Cl.: H04W 72/21

(54) **RESOURCE PROCESSING METHOD AND APPARATUS, TERMINAL, NETWORK SIDE DEVICE, AND MEDIUM**

(30) Priority: 27.11.2023 CN 202311602712
(71) Applicant: Vivo Mobile Communication Co., Ltd., Dongguan, Guangdong 523863 (CN)
(72) Inventor: LIN, Zhipeng, Dongguan, Guangdong 523863 (CN); LI, Gen, Dongguan, Guangdong 523863 (CN); PAN, Xueming, Dongguan, Guangdong 523863 (CN)
(74) Representative: dompatent
(86) International application number: PCT/CN2024/133564
(87) International publication number: WO 2025/113314

(57) **Abstract**

The present application discloses a resource processing method, a resource processing apparatus, a terminal, a network-side device, and a medium, and pertains to the field of communication technologies. The resource processing method in embodiments of the present application includes: determining, by a terminal, a first signal based on first configuration information, where the first signal is configured to perform any one of the following: notifying or requesting a network-side device to activate a flexible transmission resource, and notifying or requesting a network-side device to deactivate a flexible transmission resource; and transmitting, by the terminal, the first signal to a network-side device.

## Description

### CROSS-REFERENCE TO RELATED APPLICATIONS

The present application claims priority to Chinese Patent Application No. 202311602712.6 filed in China on November 27, 2023, which is incorporated herein by reference in its entirety.

### TECHNICAL FIELD

The present application belongs to the field of communication technologies, and specifically relates to a resource processing method, a resource processing apparatus, a terminal, a network-side device, and a medium.

### BACKGROUND

To improve utilization efficiency of transmission resources, a network may configure flexible transmission resources. For a flexible transmission resource, physical random access channel (Physical Random Access Channel, PRACH) detection is performed on the flexible transmission resource only when the flexible transmission resource is in an active state, and when the flexible transmission resource is in an inactive state, it is not necessary to perform PRACH detection on the flexible transmission resource, and in this case, the flexible transmission resource may be used for scheduling other uplink transmissions.

However, there is currently no solution on how to activate or deactivate a flexible transmission resource.

### SUMMARY

Embodiments of the present application provide a resource processing method, a resource processing apparatus, a terminal, a network-side device, and a medium, so as to address the problem of how to activate or deactivate a flexible transmission resource.

According to a first aspect, a resource processing method is provided, executed by a terminal. The method includes: determining, by a terminal, a first signal based on first configuration information, where the first signal is configured to perform any one of the following: notifying or requesting a network-side device to activate a flexible transmission resource, and notifying or requesting a network-side device to deactivate a flexible transmission resource; transmitting, by the terminal, the first signal to the network-side device.

According to a second aspect, a resource processing method is provided, executed by a network-side device. The method includes: receiving, by a network-side device, a first signal transmitted by a terminal, where the first signal is determined by the terminal based on first configuration information, and the first signal is configured to perform any one of the following: notifying or requesting the network-side device to activate a flexible transmission resource, and notifying or requesting a network-side device to deactivate a flexible transmission resource; and activating or deactivating, by the network-side device, the flexible transmission resource based on the first signal.

According to a third aspect, a resource processing apparatus is provided. The resource processing apparatus includes a determining module and a transmitting module. The determining module is configured to determine a first signal based on first configuration information, and the first signal is configured to perform any one of the following: notifying or requesting a network-side device to activate a flexible transmission resource, and notifying or requesting a network-side device to deactivate a flexible transmission resource; and the transmitting module is configured to transmit the first signal to the network-side device.

According to a fourth aspect, a resource processing apparatus is provided. The resource processing apparatus includes a receiving module and a processing module. The receiving module is configured to receive a first signal transmitted by a terminal, where the first signal is determined by the terminal based on first configuration information, and the first signal is configured to perform any one of the following: notifying or requesting a network-side device to activate a flexible transmission resource, and notifying or requesting a network-side device to deactivate a flexible transmission resource; and the processing module is configured to activate or deactivate the flexible transmission resource based on the first signal.

According to a fifth aspect, a terminal is provided. The terminal includes a processor and a memory. The memory stores a program or an instruction executable on the processor, and when the program or instruction is executed by the processor, the steps of the method according to the first aspect are implemented.

According to a sixth aspect, a terminal is provided, including a processor and a communication interface, where the processor is configured to determine a first signal based on first configuration information, and the first signal is configured to perform any one of the following: notifying or requesting a network-side device to activate a flexible transmission resource, and notifying or requesting a network-side device to deactivate a flexible transmission resource; and the communication interface is configured to transmit the first signal to the network-side device.

According to a seventh aspect, a network-side device is provided. The network-side device includes a processor and a memory. The memory stores a program or an instruction executable on the processor, and when the program or instruction is executed by the processor, the steps of the method according to the second aspect are implemented.

According to an eighth aspect, a network-side device is provided, including a processor and a communication interface, where the communication interface is configured to receive a first signal transmitted by a terminal, and the first signal is determined by the terminal based on first configuration information. The first signal is configured to perform any one of the following: notifying or requesting a network-side device to activate a flexible transmission resource, and notifying or requesting a network-side device to deactivate a flexible transmission resource; the processor is configured to activate or deactivate the flexible transmission resource based on the first signal.

According to a ninth aspect, a readable storage medium is provided. A program or an instruction is stored on the readable storage medium, and when the program or instruction is executed by a processor, the steps of the method according to the first aspect are implemented, or the steps of the method according to the second aspect are implemented.

According to a tenth aspect, a wireless communication system is provided, including a terminal and a network-side device. The terminal may be configured to perform the steps of the method according to the first aspect, and the network-side device may be configured to perform the steps of the method according to the second aspect.

According to an eleventh aspect, a chip is provided. The chip includes a processor and a communication interface, where the communication interface is coupled to the processor, and the processor is configured to run a program or an instruction to implement the method according to the first aspect, or to implement the method according to the second aspect.

According to a twelfth aspect, a computer program/program product is provided. The computer program/program product is stored in a storage medium, and the program/program product is executed by at least one processor to implement the steps of the method according to the first aspect, or to implement the steps of the method according to the second aspect.

In the embodiments of the present application, the terminal may determine a first signal based on first configuration information, where the first signal is configured to perform any one of the following: notifying or requesting a network-side device to activate a flexible transmission resource, and notifying or requesting a network-side device to deactivate a flexible transmission resource; and the terminal may transmit the first signal to the network-side device. Through this solution, the terminal may first determine, based on configuration information, a first signal configured to notify or request the network-side device to activate the flexible transmission resource, or configured to notify or request the network-side device to deactivate the flexible transmission resource, and then transmit the first signal to the network-side device, so that the network-side device activates or deactivates the flexible transmission resource. Accordingly, a specific solution for activating or deactivating the flexible transmission resource is provided.

### BRIEF DESCRIPTION OF DRAWINGS

FIG. 1 is a block diagram of a wireless communication system to which embodiments of the present application are applicable;
FIG. 2 is a schematic diagram of a physical random access channel transmission occasion (PRACH Occasion, RO) resource at one moment in the related art;
FIG. 3 is a schematic diagram of two actually transmitted SSBs associated with one RO in the related art;
FIG. 4 is a schematic diagram of an RO set determined based on the number of PRACH repetitions in the related art;
FIG. 5 is a flowchart of a resource processing method according to embodiments of the present application;
FIG. 6 is a schematic structural diagram of a resource processing apparatus according to embodiments of the present application;
FIG. 7 is a schematic structural diagram of another resource processing apparatus according to embodiments of the present application;
FIG. 8 is a schematic diagram of a communication device according to embodiments of the present application;
FIG. 9 is a schematic diagram of a hardware structure of a terminal according to embodiments of the present application; and
FIG. 10 is a schematic diagram of a hardware structure of a network-side device according to embodiments of the present application.

### DESCRIPTION OF EMBODIMENTS

The following clearly describes the technical solutions in the embodiments of the present application with reference to the accompanying drawings in the embodiments of the present application. Apparently, the described embodiments are some but not all of the embodiments of the present application. Based on the embodiments of the present application, all other embodiments obtained by those of ordinary skill in the art shall fall within the protection scope of the present application.

The terms "first", "second", and the like in the present application are used to distinguish similar objects and are not used to describe a specific order or sequence. It should be understood that the terms used in such a way may be interchangeable in appropriate circumstances such that the embodiments of the present application may be implemented in other orders than the order illustrated or described herein. In addition, objects distinguished by "first" and "second" are generally of the same type, and the quantities of the objects are not limited, for example, there may be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after the character.

The term "indication" in the present application may be a direct indication (or explicit indication) or an indirect indication (or implicit indication). The direct indication may be understood as the transmitter explicitly informing the receiver of specific information, operations to be performed, or request results in the transmitted indication; the indirect indication may be understood as the receiver determining corresponding information according to the indication transmitted by the transmitter, or performing judgment and determining operations to be performed or request results according to the judgment result.

It is worth pointing out that the technology described in the embodiments of the present application is not limited to the long term evolution (Long Term Evolution, LTE)/LTE-Advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described may be used in the systems and radio technologies mentioned above and other systems and radio technologies. In the following descriptions, a new radio (New Radio, NR) system is described for an illustration purpose, and NR terms are used in most of the following description, but these technologies may also be applied to systems other than NR systems, such as the 6^{th} Generation (6^{th} Generation, 6G) communication system.

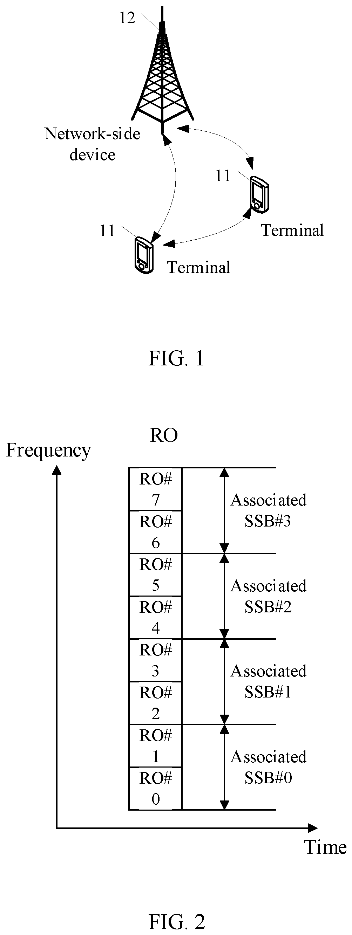

FIG. 1 is a block diagram of a wireless communication system to which embodiments of the present application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), a ship-borne device, pedestrian user equipment (Pedestrian User Equipment, PUE), a smart appliance (a household device with a wireless communication function, for example, a refrigerator, a television, a washing machine, or furniture), a game console, a personal computer (Personal Computer, PC), a teller machine, or a self-service machine. The wearable device includes a smart watch, a smart band, a smart earphone, smart glasses, smart jewelry (a smart bangle, a smart bracelet, a smart ring, a smart necklace, a smart anklet, a smart chain anklet, or the like), a smart wristband, smart clothing, or the like. The vehicle user equipment may also be called vehicle terminal, vehicle controller, vehicle module, vehicle component, vehicle chip, vehicle unit, or the like. It should be noted that the specific type of the terminal 11 is not limited in the embodiments of the present application. The network-side device 12 may include an access network device or core network device, where the access network device may also be referred to as radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or some other suitable term in the field. As long as the same technical effect is achieved, the base station is not limited to specific technical vocabulary. It should be noted that in the embodiments of the present application, only the base station in the NR system is taken as an example for introduction, and the specific type of the base station is not limited.

The following describes in detail a resource processing method, a resource processing apparatus, a terminal, a network-side device, and a medium provided in the embodiments of the present application through some embodiments and application scenarios thereof in conjunction with the accompanying drawings.

At present, configuration parameters of PRACH resources and synchronization signal block ROs (Synchronization Signal Block RO, SSB-RO) are configured in system information block (System Information Block, SIB) 1. In NR, a cell may configure a plurality of frequency division multiplexed ROs at one time domain position for transmitting PRACH. The number of frequency division multiplexed ROs at one moment may be: {1,2,4,8}, which may be specifically configured by the higher layer parameter msg1-FDM.

A random access preamble (that is, Preamble) may only be transmitted on time-domain resources configured by the parameter PRACHConfigurationIndex and frequency-domain resources configured by the parameter msg1-FDM. The PRACH frequency-domain resource n_RA ∈ {0, 1, ..., M-1}, where M is equal to the higher layer parameter msg1-FDM. During initial access, the PRACH frequency-domain resource n_RA is numbered in ascending order starting from the RO resource with the lowest frequency within an initial active uplink bandwidth part (that is, active uplink bandwidth part). Otherwise, the PRACH frequency-domain resource n_RA is numbered in ascending order starting from the RO resource with the lowest frequency in the initial active uplink bandwidth part (that is, active uplink bandwidth part). For example, as shown in FIG. 2, the number of frequency division multiplexed ROs at one moment is 8 (that is, the parameter msg1-FDM=8), and the RO resources are numbered RO#0 to RO#7 in ascending order of frequency.

In NR, there is an association relationship between an RO and an actually transmitted SSB. ROs are associated with the SSB in an order of first frequency domain (for example, from low frequency to high frequency) and then time domain. One SSB may be associated with a plurality of consecutive ROs, or a plurality of SSBs may be associated with one RO. In this case, different SSBs correspond to different preambles, which are configured by the network through the parameter ssb-perRACH-OccasionAndCB-PreamblesPerSSB. For example, one SSB may be associated with 8 consecutive ROs, or 8 SSBs may be associated with one RO. After all SSBs are associated with ROs for one round, an SSB-RO mapping cycle (that is, SSB-RO mapping cycle) is formed. An association period between SSB and RO (that is, association period) may include one or a plurality of SSB-RO mapping cycles, and an association pattern period between SSB and RO (that is, association pattern period) may include one or a plurality of SSB-RO association periods. The SSB-to-RO mapping is repeated with the association pattern period as a cycle, and the maximum association pattern period is 160 ms.

Usually, a base station may use different beams to transmit different SSBs, where the number of SSBs is configured by the parameter ssb-PositionsInBurst. For frequency range (Frequency Range, FR) 2, the maximum number of SSBs is 64. A terminal selects, based on the strength of a received downlink beam/SSB, an RO associated with an SSB having good signal or a combination of the associated RO and a preamble, and transmits Msg1 (that is, message 1). In this way, the network may determine, based on the RO for the received preamble, or the combination of the RO and the preamble, the SSB selected by the terminal, and transmit Msg2 on a downlink beam corresponding to the SSB, so as to ensure reception quality of the downlink signal.

For example, as shown in FIG. 2, the number of frequency division multiplexed ROs at one moment is 8, and the number of actually transmitted SSBs is 4, namely SSB#0, SSB#1, SSB#2, SSB#3, where each SSB is associated with 2 ROs. If the terminal determines to transmit PRACH/Msg1 on an RO corresponding to SSB#0, the terminal selects one RO from RO#0 and RO#1 to transmit PRACH.

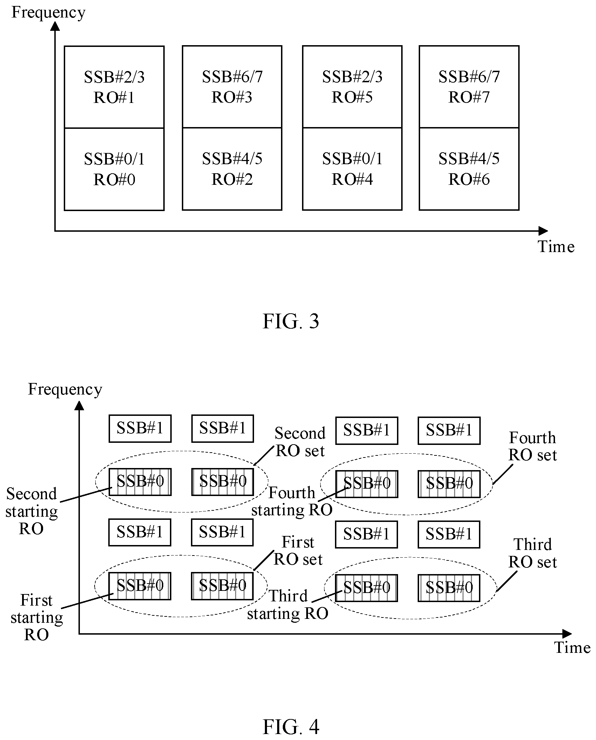

For another example, as shown in FIG. 3, the number of frequency division multiplexed ROs at one moment is 2, and the number of actually transmitted SSBs is 8, namely SSB#0, SSB#1, ..., SSB#7, where every 2 SSBs are associated with one RO. When a plurality of SSBs share one RO, preamble sets associated with the plurality of SSBs are different, that is, the same preamble may not simultaneously belong to preamble sets associated with different SSBs. Taking RO#0 as an example, it is assumed that RO#0 has a total of 60 preambles, where preambles with indexes (that is, indexes) 0 to 29 may be associated with SSB#0, and preambles with indexes 30 to 59 may be associated with SSB#1.

Before transmitting PRACH, the terminal may first select, based on a reference signal receiving power (Reference Signal Receiving Power, RSRP) of a received beam (or SSB), an SSB whose RSRP is higher than a threshold. If RSRPs of a plurality of SSBs are all higher than the threshold, the terminal may select any one of the SSBs whose RSRP is higher than the threshold. If no SSB has an RSRP higher than the threshold, the terminal may select an SSB based on implementation.

Based on a configuration of a network, the terminal obtains a correspondence between SSBs and ROs. After selecting an SSB, an RO corresponding to the selected SSB is used for transmitting PRACH/Preamble/Msg1. If the selected SSB is associated with a plurality of ROs, the terminal selects one of the plurality of ROs to transmit PRACH/Preamble/Msg1.

For example, as shown in FIG. 2, assuming that the terminal selects SSB#1, the terminal may select one RO from RO#2 and RO#3 to transmit PRACH/Msg1.

For another example, as shown in FIG. 3, if the terminal selects SSB#1, the terminal may select, from ROs associated with SSB#1 (that is, RO#0 and RO#4), an available RO closest to a current system time to transmit PRACH/Msg1. Within the selected RO, the terminal selects one preamble from a preamble set associated with the selected SSB to transmit PRACH. If one RO is associated with two SSBs, a collection of available preambles associated with the SSBs within one RO are divided into two subsets, each subset corresponding to one SSB. The terminal selects a preamble sequence from a preamble subset corresponding to the selected SSB for transmitting PRACH/Msg1.

In Rel-18, PRACH repetition is introduced to enhance uplink coverage. For PRACH repetition, the terminal needs to repeatedly transmit a preamble on a plurality of ROs at different time domain positions associated with a same SSB, where the number of repetitions may be {2,4,8}. After determining the number of PRACH repetitions, the terminal needs to determine an RO set (that is, RO group), and the number of valid ROs in the RO set is equal to the number of PRACH repetitions. Assuming that the number of PRACH repetitions is N, a rule for determining the RO group is as follows: a starting RO (that is, starting RO) of the RO group is first determined, and then remaining N-1 ROs of the RO group are determined. The remaining N-1 ROs in each RO group are ROs associated with a same SSB as the starting RO, having a same frequency-domain position, and corresponding to a same preamble set.

For example, as shown in FIG. 4, assuming that the number of PRACH repetitions is 2, for SSB#0, the RO sets may be determined as: a first RO set, a second RO set, a third RO set, and a fourth RO set.

To control complexity and power consumption of PRACH detection at a network or to control overhead of PRACH resources, a flexible PRACH resource need to be configured. The flexible PRACH resource is activated only when needed, so that when it is inactive, the network does not need to perform PRACH detection on a flexible RO, and in this case, the resource of the flexible RO may be used for scheduling other uplink transmissions, improving resource utilization. In addition, the network may not need to perform detection on some resources on the flexible RO. In this case, although the network does not use such a flexible RO for scheduling other uplink channels, network reception complexity and network power consumption may be reduced to some extent.

To improve utilization efficiency of transmission resources, a network may configure flexible ROs (that is, flexible RO). For a flexible RO, PRACH detection is performed on the flexible RO only when the flexible RO is in an active state, and when the flexible RO is in an inactive state, it is not necessary to perform PRACH detection on the flexible RO, and in this case, the flexible transmission resource may be used for scheduling other uplink transmissions. However, there is currently no solution on how to activate or deactivate a flexible RO.

To address the above problems, in an resource processing method provided in embodiments of the present application, the terminal may determine a first signal based on first configuration information, where the first signal is configured to perform any one of the following: notifying or requesting a network-side device to activate a flexible RO, and notifying or requesting a network-side device to deactivate a flexible RO; and the terminal may transmit the first signal to the network-side device. Through this solution, the terminal may first determine, based on configuration information, a first signal configured to notify or request a network-side device to activate a flexible RO, or configured to notify or request a network-side device to deactivate a flexible RO, and then transmit the first signal to the network-side device, so that the network-side device activates or deactivates the flexible RO. Accordingly, a specific solution for activating or deactivating a flexible RO is provided.

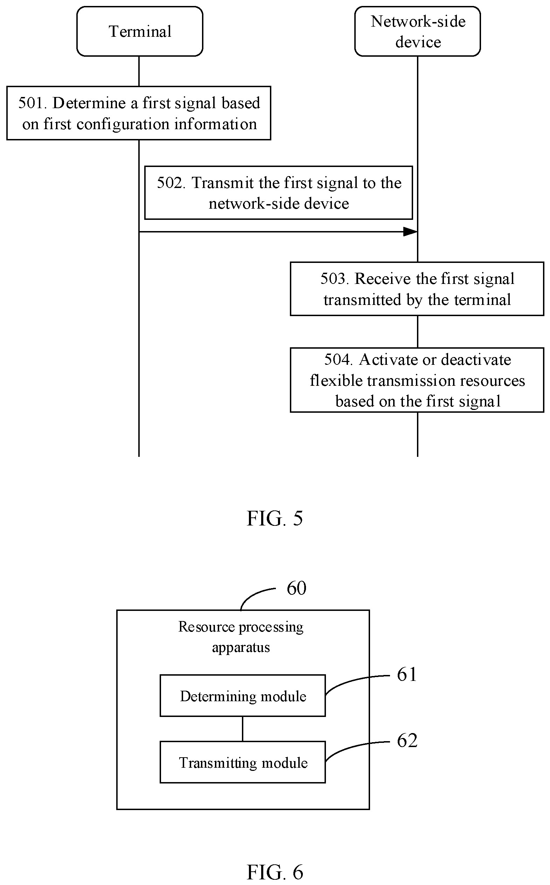

An embodiment of the present application provides a resource processing method. FIG. 5 shows a flowchart of the resource processing method according to embodiments of the present application. As shown in FIG. 5, the resource processing method provided in the embodiments of the present application may include the following steps 501 to 504.

Step 501: The terminal determines a first signal based on first configuration information, where
the first signal is configured to perform any one of the following: notifying or requesting a network-side device to activate a flexible transmission resource, and notifying or requesting a network-side device to deactivate a flexible transmission resource.

Optionally, in the embodiments of the present application, the flexible transmission resource may be any PRACH resource that may be activated or deactivated. For example, the flexible transmission resource may be the above-mentioned flexible RO, or some or all of preambles on the flexible RO.

Optionally, in the embodiments of the present application, the flexible transmission resource may alternatively be at least one of any of the following: a time-frequency resource for transmission of other signals, a demodulation reference signal (Demodulation Reference Signal, DMRS) resource, and a sequence. For example, the flexible transmission resource may be: a flexible physical uplink shared channel (Physical Uplink Shared Channel, PUSCH) transmission occasion (that is, flexible PUSCH occasion), a flexible paging occasion (that is, flexible paging occasion), a flexible message A physical uplink shared channel transmission occasion (that is, flexible MsgA PUSCH occasion), a flexible physical downlink shared channel (Physical Downlink Shared Channel, PDSCH) transmission occasion (that is, flexible PDSCH occasion), or a flexible physical downlink control channel (Physical Downlink Control Channel, PDCCH) transmission occasion (that is, flexible PDCCH occasion), and the like. In this case, the first signal may be configured to perform any one of the following: notifying or requesting a network-side device to activate transmission and reception of a related signal or channel, and notifying or requesting a network-side device to deactivate transmission and reception of a related signal or channel.

Optionally, in the embodiments of the present application, activating the flexible transmission resource may be understood as at least one of the following: allowing a terminal to transmit a PRACH signal on the flexible transmission resource, and allowing a network to detect a PRACH signal on the flexible transmission resource.

Optionally, in the embodiments of the present application, deactivating the flexible transmission resource may be understood as at least one of the following: disallowing a terminal to transmit a PRACH signal on the flexible transmission resource, and disallowing a network to detect a PRACH signal on the flexible transmission resource.

Optionally, in the embodiments of the present application, the first configuration information may include at least one of items 1.1 to 1.6 as follows.

1.1. Synchronization reference configuration information, where the synchronization reference configuration information is configured to configure a synchronization reference object for a signal.

Optionally, in the embodiments of the present application, the synchronization reference object may include at least one of the following:
an SSB, CSI-RS, and a TRS transmitted on a first carrier;
an SSB, CSI-RS, and a TRS transmitted on a second carrier;
an SSB, CSI-RS, and a TRS transmitted on an intra-band carrier of a second carrier;
an SSB, CSI-RS, and a TRS transmitted on a third carrier;
an SSB, CSI-RS, and a TRS transmitted on an intra-band carrier of a third carrier; and
Global Positioning System (GPS) timing; where
any two of the first carrier, the second carrier, and the third carrier may be the same or different.

Optionally, in the embodiments of the present application, the first carrier may be a downlink carrier corresponding to a carrier on which a transmission resource other than the flexible transmission resource is located, the second carrier may be a downlink carrier corresponding to a carrier on which the flexible transmission resource is located, and the third carrier may be any other carrier.

1.2. Signal form configuration information, where the signal form configuration information is configured to configure the signal as a signal of a first form.

Optionally, in the embodiments of the present application, the signal of the first form may include at least one of the following:
a PRACH;
a sounding reference signal (Sounding Reference Signal, SRS);
a physical uplink control channel (Physical Uplink Control Channel, PUCCH);
a PUSCH;
another activation signal for triggering downlink signal transmission or downlink channel transmission; and
another on-demand signal.

Optionally, in the embodiments of the present application, the PUSCH may be a configured grant (Configured Grant, CG) PUSCH.

Optionally, in the embodiments of the present application, the above another activation signal for triggering downlink signal transmission or downlink channel transmission may be an activation signal for triggering SSB transmission.

Optionally, in the embodiments of the present application, when the terminal receives the activation signal for triggering SSB transmission, it may be considered that a corresponding flexible transmission resource has been activated.

It should be noted that, in the embodiments of the present application, the SSB may alternatively be any module including at least one of a synchronization signal, a broadcast signal, a broadcast channel, and a downlink broadcast channel carrying other system information.

Optionally, in the embodiments of the present application, the above another on-demand signal may be an on-demand SSB.

Optionally, in the embodiments of the present application, when the terminal receives the on-demand SSB, it may be considered that the corresponding flexible transmission resource has been activated.

1.3. Resource configuration information, where the resource configuration information is configured to configure resource for the signal.

Optionally, in the embodiments of the present application, the resource for the signal may include at least one of the following: a time-domain resource, a frequency-domain resource, a sequence resource, and a spatial domain resource.

Optionally, in the embodiments of the present application, configuring the resource for the signal may include at least one of the following:
configuring the resource for the signal and the flexible transmission resource to be in a same serving cell;
configuring the resource for the signal and the flexible transmission resource to be in different serving cells;
configuring the resource for the signal and the flexible transmission resource to be in a same bandwidth part (Bandwidth Part, BWP);
configuring the resource for the signal and the flexible transmission resource to be in different BWPs;
configuring the resource for the signal and the flexible transmission resource to be on a same carrier;
configuring the resource for the signal and the flexible transmission resource to be on different carriers;
configuring the resource for the signal and the flexible transmission resource to be in a same frequency band;
configuring the resource for the signal and the flexible transmission resource to be in different frequency bands;
configuring a second association relationship between the resource for the signal and different flexible transmission resources; and
configuring the resource for the signal as a resource for activating or deactivating another on-demand signal.

Optionally, in the embodiments of the present application, the terminal may activate flexible transmission resources on a corresponding secondary cell (Secondary Cell, SCell) or a plurality of SCells by using a primary secondary cell (Primary Secondary Cell, PScell) or an activation signal on a PScell.

Optionally, in the embodiments of the present application, the terminal may activate flexible transmission resources on a corresponding active BWP (that is, active BWP) or a plurality of active BWPs by using an activation signal on an initial BWP (that is, Initial BWP).

Optionally, in the embodiments of the present application, the terminal may activate flexible transmission resources on a corresponding supplementary carrier (that is, supplementary carrier) or a plurality of supplementary carriers by using an activation signal on a normal uplink carrier (that is, normal UL carrier).

Optionally, in the embodiments of the present application, for a scenario of a plurality of frequency bands (that is, band) in a single cell, the terminal may activate flexible transmission resources on one or more other bands in the plurality of bands by using an activation signal on one band in the plurality of bands.

Optionally, in the embodiments of the present application, resources of the above another on-demand signal may be resources of an activation signal for an on-demand SSB.

Optionally, in the embodiments of the present application, the second association relationship may include at least one of the following:
an association of the resource for the signal with a cell on which the flexible transmission resource is located;
an association of the resource for the signal with a carrier on which the flexible transmission resource is located;
an association of the resource for the signal with a frequency band on which the flexible transmission resource is located;
an association of the resource for the signal with a type of the flexible transmission resource;
an association of the resource for the signal with types of different preamble groups (which may also be referred to as preamble sets, that is, preamble group) in the flexible transmission resource; and
an association of the resource for the signal with different feature combinations (that is, feature combination) of the flexible transmission resource.

Optionally, in the embodiments of the present application, the type of the flexible transmission resource may be not limited to flexible transmission resources of different service types.

By way of example, the flexible transmission resource for Internet of Things (IoT) services and the flexible transmission resource for enhanced mobile broadband (Enhanced Mobile Broadband, eMBB) services may be different flexible transmission resources. In this case, the resources of the corresponding first signal may be reserved independently, for example, for each associated SSB, different preamble identifiers on the normal RO are reserved respectively for activating the flexible transmission resources of the two types of services.

Optionally, in the embodiments of the present application, for different preamble groups in the flexible transmission resource, different resources for the first signal may be reserved independently. For example, preamble identifiers on a normal RO are reserved for activation of corresponding preamble groups.

Optionally, in the embodiments of the present application, for PRACH resources on flexible transmission resources configured to indicate a certain feature combination (for example, a feature combination supporting PRACH repetition feature and Msg3 repetition feature), corresponding specific resources for the first signal (for example, preamble set 1 on a normal RO) may be used for activation; and for PRACH resources on flexible transmission resources configured to indicate another feature combination (for example, a feature combination of a reduced capability (Reduced Capability, RedCap) terminal feature and a small data transmission feature), corresponding specific another set of resources for the first signal (for example, preamble set 2 on the normal RO) is used for activation.

Optionally, in the embodiments of the present application, an association relationship between the resource for the signal and a reference signal may satisfy at least one of the following:
the resource for the signal is associated with the same reference signal index;
the resource for the signal is associated with a plurality of reference signal indexes.

Optionally, in the embodiments of the present application, the reference signals include, but are not limited to: SSB, channel state information reference signal (Channel State Information Reference Signal, CSI-RS), TRS, MsgA, MsgA PUSCH, PRACH, or CG PUSCH. The reference signal may include a reference signal of one cell or a plurality of cells, and the included cells may be in a same frequency band or different frequency bands, and may be intra-band or inter-band.

Optionally, in the embodiments of the present application, association between the reference signal and the resource for the first signal includes, but is not limited to: association between an SSB and a resource for the first signal, association between a CSI-RS and a resource for the first signal, association between a TRS and a resource for the first signal, association between PRACH resources and a resource for the first signal, association between a MsgA resource and a resource for the first signal, association between a MsgA PUSCH resource and a resource for the first signal, and association between a CG PUSCH and a resource for the first signal.

By way of example, assuming that the reference signal is SSB, then N preambles may be reserved on the normal RO and respectively mapped one-to-one to N SSB indexes; where N may be configured by a network or predetermined. For example, N may be a number of SSBs associated with the RO (when the number of SSBs is less than 1, N may be 1).

By way of another example, within a certain number of allocated or default preambles on a normal RO, one or more preamble indexes are reserved for each SSB index associated with the RO for transmission of the first signal. For example, the reserved preamble indexes may be specific preamble indexes in contention free random access (Contention Free Random Access, CFRA) preambles.

1.4. Power configuration information, where the power configuration information is configured to configure a power parameter for a signal.

Optionally, in the embodiments of the present application, the power parameter may include at least one of the following: an initial power and a power ramping step.

1.5. Configuration information about a number of repetitions, where the repetition configuration information is configured to configure the number of repetitions for signal transmission.

Optionally, in the embodiments of the present application, the number of repetitions for signal transmission may include at least one of the following: a number of repetitions for each signal transmission, and a maximum number of repetitions for signal transmission.

1.6. Spatial parameter configuration information, where the spatial parameter configuration information is configured to configure a first association relationship between a signal and a second signal.

Optionally, in the embodiments of the present application, the second signal may include, but is not limited to, at least one of the following: an SSB, a CSI-RS, an SRS, and a PRACH.

In the embodiments of the present application, since the first configuration information may include at least one of the above 1.1 to 1.6, the first signal may be determined based on different first configuration information, thereby improving the flexibility of determining the first signal.

Optionally, in the embodiments of the present application, the first signal may include at least one of the following 2.1 to 2.5.

2.1. A first time resource and a second time resource that are different from each other, where the first time resource is configured to notify or request the network-side device to activate the flexible transmission resource, and the second time resource is configured to notify or request the network-side device to deactivate the flexible transmission resource.

2.2. A first frequency-domain resource and a second frequency-domain resource that are different from each other, where the first frequency-domain resource is configured to notify or request the network-side device to activate the flexible transmission resource, and the second frequency-domain resource is configured to notify or request the network-side device to deactivate the flexible transmission resource.

2.3. A first spatial resource and a second spatial resource that are different from each other, where the first spatial resource is configured to notify or request the network-side device to activate the flexible transmission resource, and the second spatial resource is configured to notify or request the network-side device to deactivate the flexible transmission resource.

For example, the first signal associated with two different reference signal indexes may use one of the reference signal indexes for notifying or requesting the network-side device to activate the flexible transmission resource, and the other reference signal index for notifying or requesting the network-side device to deactivate the flexible transmission resource.

2.4. A first signal sequence and a second signal sequence that are different from each other, where the first signal sequence is configured to notify or request the network-side device to activate the flexible transmission resource, and the second signal sequence is configured to notify or request the network-side device to deactivate the flexible transmission resource.

2.5. A third signal and a fourth signal, where the third signal is configured to notify or request the network-side device to activate the flexible transmission resource, and the fourth signal resource is configured to notify or request the network-side device to deactivate the flexible transmission resource.

In the embodiments of the present application, since the first signal may include at least one of the above 2.1 to 2.5, different first signals may be used to notify or request the network-side device to activate the flexible transmission resource, or to notify or request the network-side device to deactivate the flexible transmission resource, thereby improving the flexibility of designing the first signal.

Step 502: The terminal transmits the first signal to the network-side device.

Optionally, in the embodiments of the present application, the first signal may be a PRACH signal. By way of example, the step 502 may be specifically implemented by the following step 502a.

Step 502a: The terminal transmits a PRACH signal to the network-side device using a PRACH resource, where
the PRACH resource may include at least one of the following:
a group of PRACH preambles on a first transmission resource;
part of the first transmission resource;
an additionally independently configured transmission resource;
part of specific PRACH preambles on the flexible transmission resource; and
part of the flexible transmission resource; where
the first transmission resource is a transmission resource other than the flexible transmission resource.

Optionally, in the embodiments of the present application, in addition to the preambles used for contention based random access (Contention Based Random Access, CBRA) and CFRA on the RO, a starting preamble index may be configured as the first preamble used for activating the flexible transmission resource. When the number M of SSBs mapped to one RO is greater than 1, M consecutive preambles starting from the starting preamble index are mapped one-to-one to M SSBs. The terminal may determine, based on SSB measurements, a preamble to be selected for activating the flexible transmission resource.

In the embodiments of the present application, when the first signal is a PRACH signal, the terminal may use different PRACH resources to transmit the PRACH signal to the network-side device, thereby further improving the flexibility of transmitting the first signal.

Optionally, in the embodiments of the present application, the first signal is configured to notify or request the network-side device to activate the flexible transmission resource. By way of example, the step 502 may be specifically implemented by the following step 502b.

Step 502b: When a first condition is satisfied, the terminal transmits the first signal to the network-side device, where
the first condition may include at least one of the following:
the terminal performs random access on a first transmission resource;
the number of times that the terminal fails to receive a random access response message on a first transmission resource reaches a first number of times;
the terminal measures a reference signal associated with a first transmission resource, and a measured signal quality parameter of the reference signal does not meet a first threshold requirement;
the terminal fails to complete random access after performing a second number of PRACH repetitions on a first transmission resource;
the terminal fails to complete random access after performing two-step random access and four-step random access sequentially;
a historical number of transmissions of the first signal is less than or not greater than a third number of times;
a TA for the terminal to transmit the first signal is a valid TA;
a duration between a current system time and a time at which the terminal most recently transmitted the first signal is greater than or not less than a first duration;
a power for the terminal to transmit a PRACH signal on a first transmission resource is greater than or not less than a first power threshold;
the terminal receives a random access response message, and a preamble identifier in the random access response message is different from a preamble identifier transmitted by the terminal on a first transmission resource;
the terminal receives a random access response message, a preamble identifier in the random access response message is different from a preamble identifier transmitted by the terminal on a first transmission resource, and a number of random access response messages received by the terminal within a second duration is greater than or not less than a first quantity threshold;
the terminal has triggered transmission of an activation signal or a deactivation signal for network energy saving;
the terminal detects an on-demand signal;
a duration between a current system time and a time at which the terminal most recently transmitted a signal for deactivating the flexible transmission resource is greater than or not less than a third duration; and
a duration of a most recent activation of the flexible transmission resource is greater than or not less than a fourth duration; where
the first transmission resource is a transmission resource other than the flexible transmission resource.

Optionally, in the embodiments of the present application, the first number of times, the second number of times, and the third number of times may all be any number of times configured according to actual usage requirements, and any two of the first number of times, the second number of times, and the third number of times may be the same or different.

Optionally, in the embodiments of the present application, the signal quality parameter may include, but is not limited to: reference signal receiving power (Reference Signal Receiving Power, RSRP), reference signal received quality (Reference Signal Received Quality, RSRQ), or signal to interference plus noise ratio (Signal to Interference plus Noise Ratio, SINR).

Optionally, in the embodiments of the present application, the first threshold requirement corresponds to the signal quality parameter.

For example, when SS-RSRPs measured on all SSBs associated with the normal RO is lower than an SS-RSRP threshold, the terminal may transmit the first signal.

Optionally, in the embodiments of the present application, the first duration, the second duration, and the third duration may all be any durations configured according to actual usage requirements, and any two of the first duration, the second duration, and the third duration may be the same or different.

Optionally, in the embodiments of the present application, the second duration may be a random access response window (Random Access Response window, RAR window) length, or a plurality of RAR window lengths, or a window additionally configured by the network, or a window additionally specified by a protocol (for example, 10 ms).

Optionally, in the embodiments of the present application, the first quantity threshold may be configured by the network, or specified by the protocol, or related to at least one of the number of SSBs associated with the normal RO and the number of configured preambles.

For example, the first quantity threshold may be a value obtained by dividing a total number of preambles configured on a normal RO by the number of SSBs associated with the normal RO and rounding down a division result.

Optionally, in the embodiments of the present application, the first power threshold may be PCmax.

Optionally, in the embodiments of the present application, the activation signal for network energy saving may be an activation signal for activating on-demand specific signals.

Optionally, in the embodiments of the present application, the specific signal may be at least one of the following: SSB, paging, PDSCH, PDCCH, PRS, TRS signal/channel.

For example, when the terminal transmits an uplink wake-up signal (that is, the specific signal) for activating an on-demand SSB, the terminal may transmit an uplink activation signal (that is, the first signal) for activating the flexible transmission resource.

Optionally, in the embodiments of the present application, the on-demand signal may include, but is not limited to: SSB, paging, PDSCH, PDCCH, PRS, TRS signal/channel.

For example, when an on-demand SSB is detected, the network does not need to operate in an energy saving state, and the corresponding flexible transmission resource may be activated.

In the embodiments of the present application, when the first condition is satisfied, the terminal may transmit, to the network-side device, a first signal for notifying or requesting the network-side device to activate the flexible transmission resource. Accordingly, the terminal may transmit an activation signal for the flexible transmission resource under different conditions, thereby improving the flexibility of transmitting the activation signal and avoiding resource conflicts in transmitting the activation signal.

Optionally, in the embodiments of the present application, the first signal is configured to notify or request the network-side device to deactivate the flexible transmission resource. By way of example, the step 502 may be specifically implemented by the following step 502c.

Step 502c: When a second condition is satisfied, the terminal transmits the first signal to the network-side device, where
the second condition may include at least one of the following:
the terminal performs random access on a first transmission resource;
the number of times that the terminal fails to receive a random access response message on a first transmission resource does not reach a first number of times;
the terminal measures a reference signal associated with a first transmission resource, and a measured signal quality parameter of the reference signal meets a first threshold requirement;
the terminal performs a second number of PRACH repetitions on a first transmission resource;
the terminal performs two-step random access but does not trigger four-step random access;
a historical number of transmissions of the first signal is greater than or not less than a third number of times;
a TA for the terminal to transmit the first signal is an invalid TA;
a duration between a current system time and a time at which the terminal most recently transmitted the first signal is less than or not greater than a first duration;
a power for the terminal to transmit a PRACH signal on a first transmission resource is less than or not greater than a first power threshold;
the terminal receives a random access response message, and a preamble identifier in the random access response message is the same as a preamble identifier transmitted by the terminal on a first transmission resource;
the terminal receives a random access response message, a preamble identifier in the random access response message is different from a preamble identifier transmitted by the terminal on a first transmission resource, and a number of random access response messages received by the terminal within a second duration is less than or not greater than a first quantity threshold;
the terminal does not trigger transmission of an activation signal or a deactivation signal for network energy saving;
the terminal does not detect an on-demand signal; and
a duration between a current system time and a time at which the terminal most recently transmitted a signal for activating the flexible transmission resource is greater than or not less than a fifth duration; where
the first transmission resource is a transmission resource other than the flexible transmission resource.

For the specific description of step 502c, reference may be made to the relevant description in the step 502b, and to avoid repetition, details are not repeated here.

In the embodiments of the present application, when the second condition is satisfied, the terminal may transmit, to the network-side device, a first signal for notifying or requesting the network-side device to deactivate the flexible transmission resource, the terminal may transmit the deactivation signal of the flexible transmission resource under different conditions, thereby improving the flexibility of transmitting the deactivation signal and avoiding resource conflicts in transmitting the deactivation signal.

Step 503: The network-side device receives the first signal transmitted by the terminal.

Optionally, in the embodiments of the present application, the first signal may be a PRACH signal. By way of example, the step 503 may be specifically implemented by the following step 503a.

Step 502a: The network-side device receives a PRACH signal transmitted by the terminal using a PRACH resource, where
the PRACH resource may include at least one of the following:
a group of PRACH preambles on a first transmission resource;
part of the first transmission resource;
an additionally independently configured transmission resource;
part of specific PRACH preambles on the flexible transmission resource; and
part of the flexible transmission resource; where
the first transmission resource is a transmission resource other than the flexible transmission resource.

Step 504: The network-side device activates or deactivates the flexible transmission resource based on the first signal.

Optionally, in the embodiments of the present application, when the first signal is configured to notify or request the network-side device to activate the flexible transmission resource, the terminal may activate the flexible transmission resource according to the notification or request of the first signal.

Optionally, in the embodiments of the present application, when the first signal is configured to notify or request the network-side device to deactivate the flexible transmission resource, the terminal may deactivate the flexible transmission resource according to the notification or request of the first signal.

For other descriptions in the embodiments of the present application, reference may be made to the relevant descriptions in the above embodiments, and to avoid repetition, details are not repeated here.

In the resource processing method provided in the embodiments of the present application, the terminal may first determine, based on configuration information, a first signal configured to notify or request the network-side device to activate the flexible transmission resource, or configured to notify or request the network-side device to deactivate the flexible transmission resource, and then transmit the first signal to the network-side device. Accordingly, the network-side device, after receiving the first signal, may activate or deactivate the flexible transmission resource based on the first signal, thereby providing a specific solution for activating or deactivating the flexible transmission resource.

The resource processing method provided in the embodiments of the present application may be performed by a resource processing apparatus. In the embodiments of the present application, a resource processing apparatus provided in the embodiments of the present application is described by using an example in which a resource processing apparatus performs the resource processing method.

With reference to FIG. 6, embodiments of the present application provide a resource processing apparatus 60. The resource processing apparatus 60 may include a determining module 61 and a transmitting module 62.

The determining module 61 may be configured to determine a first signal based on first configuration information, where the first signal is configured to perform any one of the following: notifying or requesting a network-side device to activate a flexible transmission resource, and notifying or requesting a network-side device to deactivate a flexible transmission resource. The transmitting module 62 may be configured to transmit the first signal to the network-side device.

In a possible implementation, the first configuration information may include at least one of the following: synchronization reference configuration information, where the synchronization reference configuration information is configured to configure a synchronization reference object for a signal; signal form configuration information, where the signal form configuration information is configured to configure the signal as a signal of a first form; resource configuration information, where the resource configuration information is configured to configure resource for the signal; power configuration information, where the power configuration information is configured to configure a power parameter for a signal; configuration information about a number of repetitions, where the repetition configuration information is configured to configure the number of repetitions for signal transmission; and spatial parameter configuration information, where the spatial parameter configuration information is configured to configure a first association relationship between the signal and a second signal.

In a possible implementation, the synchronization reference object may include at least one of the following: an SSB, CSI-RS, and a TRS transmitted on a first carrier; an SSB, CSI-RS, and a TRS transmitted on a second carrier; an SSB, CSI-RS, and a TRS transmitted on an intra-band carrier of a second carrier; an SSB, CSI-RS, and a TRS transmitted on a third carrier; an SSB, CSI-RS, and a TRS transmitted on an intra-band carrier of a third carrier; and GPS timing, where any two of the first carrier, the second carrier, and the third carrier may be the same or different.

In a possible implementation, the signal of the first form may include at least one of the following: a PRACH; an SRS; a PUCCH; a PUSCH; another activation signal for triggering downlink signal transmission or downlink channel transmission; and another on-demand signal.

In a possible implementation, the resource for the signal may include at least one of the following: a time-domain resource, a frequency-domain resource, a sequence resource, and a spatial domain resource.

In a possible implementation, the power parameter may include at least one of the following: an initial power and a power ramping step.

In a possible implementation, the number of repetitions for signal transmission may include at least one of the following: a number of repetitions for each signal transmission, and a maximum number of repetitions for signal transmission.

In a possible implementation, the second signal may include at least one of the following: an SSB, a CSI-RS, an SRS, and a PRACH.

In a possible implementation, configuring the resource for the signal may include at least one of the following: configuring the resource for the signal and the flexible transmission resource to be in a same serving cell; configuring the resource for the signal and the flexible transmission resource to be in different serving cells; configuring the resource for the signal and the flexible transmission resource to be in a same BWP; configuring the resource for the signal and the flexible transmission resource to be in different BWPs; configuring the resource for the signal and the flexible transmission resource to be on a same carrier; configuring the resource for the signal and the flexible transmission resource to be on different carriers; configuring the resource for the signal and the flexible transmission resource to be in a same frequency band; configuring the resource for the signal and the flexible transmission resource to be in different frequency bands; configuring a second association relationship between the resource for the signal and different flexible transmission resources; and configuring the resource for the signal as a resource for activating or deactivating another on-demand signal.

In a possible implementation, the second association relationship may include at least one of the following: an association of the resource for the signal with a cell on which the flexible transmission resource is located; an association of the resource for the signal with a carrier on which the flexible transmission resource is located; an association of the resource for the signal with a frequency band on which the flexible transmission resource is located; an association of the resource for the signal with a type of the flexible transmission resource; an association of the resource for the signal with types of different preamble groups in the flexible transmission resource; and an association of the resource for the signal with different feature combinations of the flexible transmission resource.

In a possible implementation, an association relationship between the resource for the signal and a reference signal may satisfy at least one of the following: the resource for the signal is associated with a same reference signal index; the resource for the signal is associated with a plurality of reference signal indexes.

In a possible implementation, the first signal may be a PRACH signal. The transmitting module 62 may be specifically configured to transmit the PRACH signal to the network-side device using a PRACH resource, where the PRACH resource may include at least one of the following: a group of PRACH preambles on a first transmission resource; part of the first transmission resource; an additionally independently configured transmission resource; part of specific PRACH preambles on the flexible transmission resource; and part of the flexible transmission resource, where the first transmission resource is a transmission resource other than the flexible transmission resource.

In a possible implementation, the first signal is configured to notify or request the network-side device to activate the flexible transmission resource. The transmitting module 62 may be specifically configured to transmit the first signal to the network-side device when a first condition is satisfied, where the first condition may include at least one of the following: the terminal performs random access on a first transmission resource; the number of times that the terminal fails to receive a random access response message on a first transmission resource reaches a first number of times; the terminal measures a reference signal associated with a first transmission resource, and a measured signal quality parameter of the reference signal does not meet a first threshold requirement; the terminal fails to complete random access after performing a second number of PRACH repetitions on a first transmission resource; the terminal fails to complete random access after performing two-step random access and four-step random access sequentially; a historical number of transmissions of the first signal is less than or not greater than a third number of times; a TA for the terminal to transmit the first signal is a valid TA; a duration between a current system time and a time at which the terminal most recently transmitted the first signal is greater than or not less than a first duration; a power for the terminal to transmit a PRACH signal on a first transmission resource is greater than or not less than a first power threshold; the terminal receives a random access response message, and a preamble identifier in the random access response message is different from a preamble identifier transmitted by the terminal on a first transmission resource; the terminal receives a random access response message, a preamble identifier in the random access response message is different from a preamble identifier transmitted by the terminal on a first transmission resource, and a number of random access response messages received by the terminal within a second duration is greater than or not less than a first quantity threshold; the terminal has triggered transmission of an activation signal or a deactivation signal for network energy saving; the terminal detects an on-demand signal; a duration between a current system time and a time at which the terminal most recently transmitted a signal for deactivating the flexible transmission resource is greater than or not less than a third duration; and a duration of a most recent activation of the flexible transmission resource is greater than or not less than a fourth duration; where the first transmission resource is a transmission resource other than the flexible transmission resource.

In a possible implementation, the first signal is configured to notify or request the network-side device to deactivate the flexible transmission resource. The transmitting module 62 may be specifically configured to transmit the first signal to the network-side device when a second condition is satisfied, where the second condition may include at least one of the following: the terminal performs random access on a first transmission resource; the number of times that the terminal fails to receive a random access response message on a first transmission resource does not reach a first number of times; the terminal measures a reference signal associated with a first transmission resource, and a measured signal quality parameter of the reference signal meets a first threshold requirement; the terminal performs a second number of PRACH repetitions on a first transmission resource; the terminal performs two-step random access but does not trigger four-step random access; a historical number of transmissions of the first signal is greater than or not less than a third number of times; a TA for the terminal to transmit the first signal is an invalid TA; a duration between a current system time and a time at which the terminal most recently transmitted the first signal is less than or not greater than a first duration; a power for the terminal to transmit a PRACH signal on a first transmission resource is less than or not greater than a first power threshold; the terminal receives a random access response message, and a preamble identifier in the random access response message is the same as a preamble identifier transmitted by the terminal on a first transmission resource; the terminal receives a random access response message, a preamble identifier in the random access response message is different from a preamble identifier transmitted by the terminal on a first transmission resource, and a number of random access response messages received by the terminal within a second duration is less than or not greater than a first quantity threshold; the terminal does not trigger transmission of an activation signal or a deactivation signal for network energy saving; the terminal does not detect an on-demand signal; and a duration between a current system time and a time at which the terminal most recently transmitted a signal for activating the flexible transmission resource is greater than or not less than a fifth duration; where the first transmission resource is a transmission resource other than the flexible transmission resource.

In a possible implementation, the first signal may include at least one of the following: a first time resource and a second time resource that are different from each other, where the first time resource is configured to notify or request the network-side device to activate the flexible transmission resource, and the second time resource is configured to notify or request the network-side device to deactivate the flexible transmission resource; a first frequency-domain resource and a second frequency-domain resource that are different from each other, where the first frequency-domain resource is configured to notify or request the network-side device to activate the flexible transmission resource, and the second frequency-domain resource is configured to notify or request the network-side device to deactivate the flexible transmission resource; a first spatial resource and a second spatial resource that are different from each other, where the first spatial resource is configured to notify or request the network-side device to activate the flexible transmission resource, and the second spatial resource is configured to notify or request the network-side device to deactivate the flexible transmission resource; a first signal sequence and a second signal sequence that are different from each other, where the first signal sequence is configured to notify or request the network-side device to activate the flexible transmission resource, and the second signal sequence is configured to notify or request the network-side device to deactivate the flexible transmission resource; and a third signal and a fourth signal, where the third signal is configured to notify or request the network-side device to activate the flexible transmission resource, and the fourth signal resource is configured to notify or request the network-side device to deactivate the flexible transmission resource.

In the resource processing apparatus provided in the embodiments of the present application, the resource processing apparatus may first determine, based on configuration information, a first signal configured to notify or request the network-side device to activate the flexible transmission resource, or configured to notify or request the network-side device to deactivate the flexible transmission resource, and then transmit the first signal to the network-side device, so that the network-side device activates or deactivates the flexible transmission resource. Accordingly, a specific solution for activating or deactivating the flexible transmission resource is provided.

The resource processing apparatus in the embodiments of the present application may be an electronic device, such as an electronic device with an operating system, or a component in an electronic device, such as an integrated circuit or a chip. The electronic device may be a terminal. By way of example, the terminal may include, but is not limited to, the types of the terminal 11 listed above, and this is not specifically limited in the embodiments of the present application.

The resource processing apparatus provided in the embodiments of the present application implements the processes that are implemented in the above terminal side method embodiments, with the same technical effects achieved. To avoid repetition, details are not repeated here.

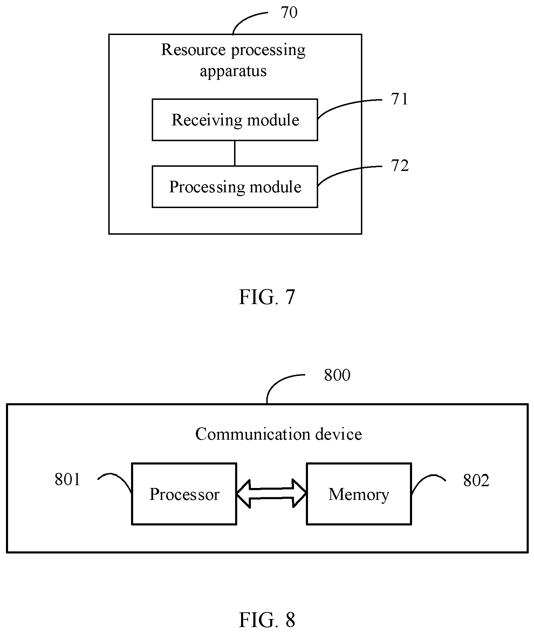

With reference to FIG. 7, embodiments of the present application provide another resource processing apparatus 70. The resource processing apparatus 70 may include a receiving module 71 and a processing module 72.

The receiving module 71 may be configured to receive a first signal transmitted by a terminal, where the first signal is determined by the terminal based on first configuration information, and is configured to perform any one of the following: notifying or requesting a network-side device to activate a flexible transmission resource, and notifying or requesting a network-side device to deactivate a flexible transmission resource. The processing module 72 may be configured to activate or deactivate the flexible transmission resource based on the first signal.

In a possible implementation, the first configuration information may include at least one of the following: synchronization reference configuration information, where the synchronization reference configuration information is configured to configure a synchronization reference object for a signal; signal form configuration information, where the signal form configuration information is configured to configure the signal as a signal of a first form; resource configuration information, where the resource configuration information is configured to configure resource for the signal; power configuration information, where the power configuration information is configured to configure a power parameter for a signal; configuration information about a number of repetitions, where the repetition configuration information is configured to configure the number of repetitions for signal transmission; and spatial parameter configuration information, where the spatial parameter configuration information is configured to configure a first association relationship between the signal and a second signal.

In a possible implementation, the synchronization reference object may include at least one of the following: an SSB, CSI-RS, and a TRS transmitted on a first carrier; an SSB, CSI-RS, and a TRS transmitted on a second carrier; an SSB, CSI-RS, and a TRS transmitted on an intra-band carrier of a second carrier; an SSB, CSI-RS, and a TRS transmitted on a third carrier; an SSB, CSI-RS, and a TRS transmitted on an intra-band carrier of a third carrier; and GPS timing, where any two of the first carrier, the second carrier, and the third carrier may be the same or different.

In a possible implementation, the signal of the first form may include at least one of the following: a PRACH; an SRS; a PUCCH; a PUSCH; another activation signal for triggering downlink signal transmission or downlink channel transmission; and another on-demand signal.

In a possible implementation, the resource for the signal may include at least one of the following: a time-domain resource, a frequency-domain resource, a sequence resource, and a spatial domain resource.

In a possible implementation, the power parameter may include at least one of the following: an initial power and a power ramping step.

In a possible implementation, the number of repetitions for signal transmission may include at least one of the following: a number of repetitions for each signal transmission, and a maximum number of repetitions for signal transmission.

In a possible implementation, the second signal may include at least one of the following: an SSB, a CSI-RS, an SRS, and a PRACH.

In a possible implementation, configuring the resource for the signal may include at least one of the following: configuring the resource for the signal and the flexible transmission resource to be in a same serving cell; configuring the resource for the signal and the flexible transmission resource to be in different serving cells; configuring the resource for the signal and the flexible transmission resource to be in a same BWP; configuring the resource for the signal and the flexible transmission resource to be in different BWPs; configuring the resource for the signal and the flexible transmission resource to be on a same carrier; configuring the resource for the signal and the flexible transmission resource to be on different carriers; configuring the resource for the signal and the flexible transmission resource to be in a same frequency band; configuring the resource for the signal and the flexible transmission resource to be in different frequency bands; configuring a second association relationship between the resource for the signal and different flexible transmission resources; and configuring the resource for the signal as a resource for activating or deactivating another on-demand signal.

In a possible implementation, the second association relationship may include at least one of the following: an association of the resource for the signal with a cell on which the flexible transmission resource is located; an association of the resource for the signal with a carrier on which the flexible transmission resource is located; an association of the resource for the signal with a frequency band on which the flexible transmission resource is located; an association of the resource for the signal with a type of the flexible transmission resource; an association of the resource for the signal with types of different preamble groups in the flexible transmission resource; and an association of the resource for the signal with different feature combinations of the flexible transmission resource.

In a possible implementation, an association relationship between the resource for the signal and a reference signal may satisfy at least one of the following: the resource for the signal is associated with a same reference signal index; and the resource for the signal is associated with a plurality of reference signal indexes.

In a possible implementation, the first signal may be a PRACH signal. The receiving module 71 may be specifically configured to receive the PRACH signal transmitted by the terminal using a PRACH resource, where the PRACH resource may include at least one of the following: a group of PRACH preambles on a first transmission resource; part of the first transmission resource; an additionally independently configured transmission resource; part of specific PRACH preambles on the flexible transmission resource; and part of the flexible transmission resource, where the first transmission resource is a transmission resource other than the flexible transmission resource.

In a possible implementation, the first signal may include at least one of the following: a first time resource and a second time resource that are different from each other, where the first time resource is configured to notify or request the network-side device to activate the flexible transmission resource, and the second time resource is configured to notify or request the network-side device to deactivate the flexible transmission resource; a first frequency-domain resource and a second frequency-domain resource that are different from each other, where the first frequency-domain resource is configured to notify or request the network-side device to activate the flexible transmission resource, and the second frequency-domain resource is configured to notify or request the network-side device to deactivate the flexible transmission resource; a first spatial resource and a second spatial resource that are different from each other, where the first spatial resource is configured to notify or request the network-side device to activate the flexible transmission resource, and the second spatial resource is configured to notify or request the network-side device to deactivate the flexible transmission resource; a first signal sequence and a second signal sequence that are different from each other, where the first signal sequence is configured to notify or request the network-side device to activate the flexible transmission resource, and the second signal sequence is configured to notify or request the network-side device to deactivate the flexible transmission resource; and a third signal and a fourth signal, where the third signal is configured to notify or request the network-side device to activate the flexible transmission resource, and the fourth signal resource is configured to notify or request the network-side device to deactivate the flexible transmission resource.

In the resource processing apparatus provided in the embodiments of the present application, the resource processing apparatus may activate or deactivate the flexible transmission resource based on the first signal transmitted by the terminal for notifying or requesting the network-side device to activate the flexible transmission resource, or for notifying or requesting the network-side device to deactivate the flexible transmission resource. Accordingly, a specific solution for activating or deactivating the flexible transmission resource is provided.

The resource processing apparatus in the embodiments of the present application may be an electronic device, such as an electronic device with an operating system, or a component in an electronic device, such as an integrated circuit or a chip. The electronic device may be a device other than the terminal. By way of example, the other device may be a server, a network attached storage (Network Attached Storage, NAS), and the like. This is not specifically limited in the embodiments of the present application.

The resource processing apparatus provided in the embodiments of the present application implements the processes that are implemented in the above network-side device method embodiments, with the same technical effects achieved. To avoid repetition, details are not repeated here.

As shown in FIG. 8, embodiments of the present application further provide a communication device 800 including a processor 801 and a memory 802. A program or an instruction executable on the processor 801 is stored on the memory 802. For example, when the communication device 800 is a terminal, and the program or instruction is executed by the processor 801, various steps of the above terminal side method embodiments are implemented, with the same technical effects achieved. When the communication device 800 is a network-side device, and the program or instruction is executed by the processor 801, various steps of the above network-side device method embodiments are implemented, with the same technical effects achieved. To avoid repetition, details are not repeated here.

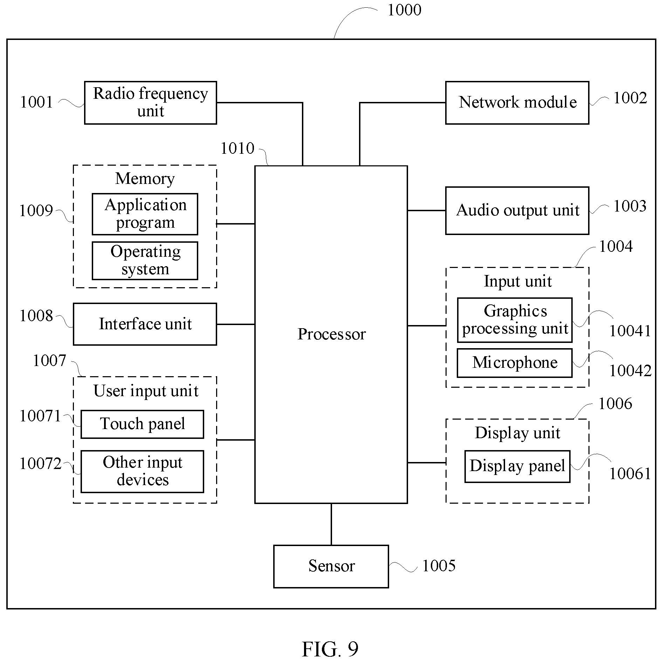

Embodiments of the present application further provide a terminal including a processor and a communication interface, where the communication interface is coupled to the processor, and the processor is configured to run a program or an instruction to implement the steps in the above terminal side method embodiments. The processor is configured to determine a first signal based on first configuration information, where the first signal is configured to perform any one of the following: notifying or requesting a network-side device to activate a flexible transmission resource, and notifying or requesting a network-side device to deactivate a flexible transmission resource. The communication interface is configured to transmit the first signal to the network-side device. The terminal embodiments correspond to the above terminal side method embodiments, and the implementation processes and implementations of the above method embodiments are applicable to the terminal embodiment, with the same technical effects achieved. Specifically, FIG. 9 is a schematic diagram of a hardware structure of a terminal implementing embodiments of the present application.

The terminal 1000 includes, but is not limited to at least some of the components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Those skilled in the art may understand that the terminal 1000 may also include a power supply (such as a battery) for supplying power to various components. The power supply may be logically connected to the processor 1010 through a power management system. In this way, functions such as charge management, discharge management, and power consumption management are implemented by using the power management system. The terminal structure shown in FIG. 9 does not constitute a limitation to the terminal. The terminal may include more or fewer components than shown in the figure, or combine some components, or have different component arrangements. Details are not repeated here.

It should be understood that in the embodiments of the present application, the input unit 1004 may include a graphics processing unit (Graphics Processing Unit, GPU) 10041 and a microphone 10042. The graphics processing unit 10041 processes image data of still pictures or videos obtained by an image capture apparatus (such as a camera) in a video capture mode or an image capture mode. The display unit 1006 may include a display panel 10061, which may be configured in the form of a liquid crystal display, an organic light emitting diode, and the like. The user input unit 1007 includes at least one of a touch panel 10071 and other input devices 10072. The touch panel 10071 is also referred to as a touch screen. The touch panel 10071 may include two parts: a touch detection device and a touch controller. The other input devices 10072 may include, but are not limited to, a physical keyboard, a function key (for example, a volume control key or a power on/off key), a trackball, a mouse, and a joystick. Details are not described herein.

In the embodiments of the present application, the radio frequency unit 1001 receives downlink data from a network-side device and transmits the data to the processor 1010 for processing; and the radio frequency unit 1001 may transmit uplink data to the network-side device. Generally, the radio frequency unit 1001 includes, but is not limited to, an antenna, an amplifier, a transceiver, a coupler, a low noise amplifier, and a duplexer.

The memory 1009 may be configured to store software programs or instructions and various data. The memory 1009 may mainly include a first storage area storing programs or instructions and a second storage area storing data, where the first storage area may store an operating system, an application program, or an instruction required for at least one function (such as a sound playback function or an image playback function). In addition, the memory 1009 may include volatile memory or non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiments of the present application includes, but is not limited to, these and any other suitable types of memories.

The processor 1010 may include one or more processing units. Optionally, the processor 1010 integrates an application processor and a modem processor, where the application processor mainly processes operations related to the operating system, user interface, and application programs, and the modem processor mainly processes wireless communication signals, such as a baseband processor. It may be understood that the above modem processor may alternatively not be integrated into the processor 1010.

The processor 1010 may be configured to determine a first signal based on first configuration information, the first signal is configured to perform any one of the following: notifying or requesting a network-side device to activate a flexible transmission resource, and notifying or requesting a network-side device to deactivate a flexible transmission resource. The radio frequency unit 1001 may be configured to transmit the first signal to the network-side device.

In a possible implementation, the first configuration information may include at least one of the following: synchronization reference configuration information, where the synchronization reference configuration information is configured to configure a synchronization reference object for a signal; signal form configuration information, where the signal form configuration information is configured to configure the signal as a signal of a first form; resource configuration information, where the resource configuration information is configured to configure resource for the signal; power configuration information, where the power configuration information is configured to configure a power parameter for a signal; configuration information about a number of repetitions, where the repetition configuration information is configured to configure the number of repetitions for signal transmission; and spatial parameter configuration information, where the spatial parameter configuration information is configured to configure a first association relationship between the signal and a second signal.

In a possible implementation, the synchronization reference object may include at least one of the following: an SSB, CSI-RS, and a TRS transmitted on a first carrier; an SSB, CSI-RS, and a TRS transmitted on a second carrier; an SSB, CSI-RS, and a TRS transmitted on an intra-band carrier of a second carrier; an SSB, CSI-RS, and a TRS transmitted on a third carrier; an SSB, CSI-RS, and a TRS transmitted on an intra-band carrier of a third carrier; and GPS timing, where any two of the first carrier, the second carrier, and the third carrier may be the same or different.

In a possible implementation, the signal of the first form may include at least one of the following: a PRACH; an SRS; a PUCCH; a PUSCH; another activation signal for triggering downlink signal transmission or downlink channel transmission; and another on-demand signal.

In a possible implementation, the resource for the signal may include at least one of the following: a time-domain resource, a frequency-domain resource, a sequence resource, and a spatial domain resource.

In a possible implementation, the power parameter may include at least one of the following: an initial power and a power ramping step.

In a possible implementation, the number of repetitions for signal transmission may include at least one of the following: a number of repetitions for each signal transmission, and a maximum number of repetitions for signal transmission.

In a possible implementation, the second signal may include at least one of the following: an SSB, a CSI-RS, an SRS, and a PRACH.

In a possible implementation, configuring the resource for the signal may include at least one of the following: configuring the resource for the signal and the flexible transmission resource to be in a same serving cell; configuring the resource for the signal and the flexible transmission resource to be in different serving cells; configuring the resource for the signal and the flexible transmission resource to be in a same BWP; configuring the resource for the signal and the flexible transmission resource to be in different BWPs; configuring the resource for the signal and the flexible transmission resource to be on a same carrier; configuring the resource for the signal and the flexible transmission resource to be on different carriers; configuring the resource for the signal and the flexible transmission resource to be in a same frequency band; configuring the resource for the signal and the flexible transmission resource to be in different frequency bands; configuring a second association relationship between the resource for the signal and different flexible transmission resources; and configuring the resource for the signal as a resource for activating or deactivating another on-demand signal.

In a possible implementation, the second association relationship may include at least one of the following: an association of the resource for the signal with a cell on which the flexible transmission resource is located; an association of the resource for the signal with a carrier on which the flexible transmission resource is located; an association of the resource for the signal with a frequency band on which the flexible transmission resource is located; an association of the resource for the signal with a type of the flexible transmission resource; an association of the resource for the signal with types of different preamble groups in the flexible transmission resource; and an association of the resource for the signal with different feature combinations of the flexible transmission resource.

In a possible implementation, an association relationship between the resource for the signal and a reference signal may satisfy at least one of the following: the resource for the signal is associated with a same reference signal index; and the resource for the signal is associated with a plurality of reference signal indexes.

In a possible implementation, the first signal may be a PRACH signal. The radio frequency unit 1001 may be specifically configured to transmit the PRACH signal to the network-side device using a PRACH resource, where the PRACH resource may include at least one of the following: a group of PRACH preambles on a first transmission resource; part of the first transmission resource; an additionally independently configured transmission resource; part of specific PRACH preambles on the flexible transmission resource; and part of the flexible transmission resource, where the first transmission resource is a transmission resource other than the flexible transmission resource.

In a possible implementation, the first signal is configured to notify or request the network-side device to activate the flexible transmission resource. The radio frequency unit 1001 may be specifically configured to transmit the first signal to the network-side device when a first condition is satisfied. The first condition may include at least one of the following: the terminal performs random access on a first transmission resource; the number of times that the terminal fails to receive a random access response message on a first transmission resource reaches a first number of times; the terminal measures a reference signal associated with a first transmission resource, and a measured signal quality parameter of the reference signal does not meet a first threshold requirement; the terminal fails to complete random access after performing a second number of PRACH repetitions on a first transmission resource; the terminal fails to complete random access after performing two-step random access and four-step random access sequentially; a historical number of transmissions of the first signal is less than or not greater than a third number of times; a TA for the terminal to transmit the first signal is a valid TA; a duration between a current system time and a time at which the terminal most recently transmitted the first signal is greater than or not less than a first duration; a power for the terminal to transmit a PRACH signal on a first transmission resource is greater than or not less than a first power threshold; the terminal receives a random access response message, and a preamble identifier in the random access response message is different from a preamble identifier transmitted by the terminal on a first transmission resource; the terminal receives a random access response message, a preamble identifier in the random access response message is different from a preamble identifier transmitted by the terminal on a first transmission resource, and a number of random access response messages received by the terminal within a second duration is greater than or not less than a first quantity threshold; the terminal has triggered transmission of an activation signal or a deactivation signal for network energy saving; the terminal detects an on-demand signal; a duration between a current system time and a time at which the terminal most recently transmitted a signal for deactivating the flexible transmission resource is greater than or not less than a third duration; and a duration of a most recent activation of the flexible transmission resource is greater than or not less than a fourth duration; where the first transmission resource is a transmission resource other than the flexible transmission resource.

In a possible implementation, the first signal is configured to notify or request the network-side device to deactivate the flexible transmission resource. The radio frequency unit 1001 may be specifically configured to transmit the first signal to the network-side device when a second condition is satisfied, where the second condition may include at least one of the following: the terminal performs random access on a first transmission resource; the number of times that the terminal fails to receive a random access response message on a first transmission resource does not reach a first number of times; the terminal measures a reference signal associated with a first transmission resource, and a measured signal quality parameter of the reference signal meets a first threshold requirement; the terminal performs a second number of PRACH repetitions on a first transmission resource; the terminal performs two-step random access but does not trigger four-step random access; a historical number of transmissions of the first signal is greater than or not less than a third number of times; a TA for the terminal to transmit the first signal is an invalid TA; a duration between a current system time and a time at which the terminal most recently transmitted the first signal is less than or not greater than a first duration; a power for the terminal to transmit a PRACH signal on a first transmission resource is less than or not greater than a first power threshold; the terminal receives a random access response message, and a preamble identifier in the random access response message is the same as a preamble identifier transmitted by the terminal on a first transmission resource; the terminal receives a random access response message, a preamble identifier in the random access response message is different from a preamble identifier transmitted by the terminal on a first transmission resource, and a number of random access response messages received by the terminal within a second duration is less than or not greater than a first quantity threshold; the terminal does not trigger transmission of an activation signal or a deactivation signal for network energy saving; the terminal does not detect an on-demand signal; and a duration between a current system time and a time at which the terminal most recently transmitted a signal for activating the flexible transmission resource is greater than or not less than a fifth duration; where the first transmission resource is a transmission resource other than the flexible transmission resource.

In a possible implementation, the first signal may include at least one of the following: a first time resource and a second time resource that are different from each other, where the first time resource is configured to notify or request the network-side device to activate the flexible transmission resource, and the second time resource is configured to notify or request the network-side device to deactivate the flexible transmission resource; a first frequency-domain resource and a second frequency-domain resource that are different from each other, where the first frequency-domain resource is configured to notify or request the network-side device to activate the flexible transmission resource, and the second frequency-domain resource is configured to notify or request the network-side device to deactivate the flexible transmission resource; a first spatial resource and a second spatial resource that are different from each other, where the first spatial resource is configured to notify or request the network-side device to activate the flexible transmission resource, and the second spatial resource is configured to notify or request the network-side device to deactivate the flexible transmission resource; a first signal sequence and a second signal sequence that are different from each other, where the first signal sequence is configured to notify or request the network-side device to activate the flexible transmission resource, and the second signal sequence is configured to notify or request the network-side device to deactivate the flexible transmission resource; and a third signal and a fourth signal, where the third signal is configured to notify or request the network-side device to activate the flexible transmission resource, and the fourth signal resource is configured to notify or request the network-side device to deactivate the flexible transmission resource.

In the terminal provided in the embodiments of the present application, the terminal may first determine, based on configuration information, a first signal configured to notify or request the network-side device to activate the flexible transmission resource, or configured to notify or request the network-side device to deactivate the flexible transmission resource, and then transmit the first signal to the network-side device, so that the network-side device activates or deactivates the flexible transmission resource. Accordingly, a specific solution for activating or deactivating the flexible transmission resource is provided.

It may be understood that the implementation processes of the implementations mentioned in the embodiments may refer to the relevant descriptions of the above terminal side method embodiments, with the same or corresponding technical effects achieved. To avoid repetition, details are not repeated here.

Embodiments of the present application further provide a network-side device including a processor and a communication interface, where the communication interface is coupled to the processor. The processor is configured to run a program or an instruction to implement the steps of the above network-side device method embodiments, and the communication interface is configured to receive a first signal transmitted by a terminal, where the first signal is determined by the terminal based on first configuration information, and is configured to perform any one of the following: notifying or requesting a network-side device to activate a flexible transmission resource, and notifying or requesting a network-side device to deactivate a flexible transmission resource; the processor is configured to activate or deactivate the flexible transmission resource based on the first signal. The network-side device embodiments correspond to the above network-side device method embodiments, and the implementation processes and implementations of the above method embodiments are applicable to the network-side device embodiments, with the same technical effects achieved.

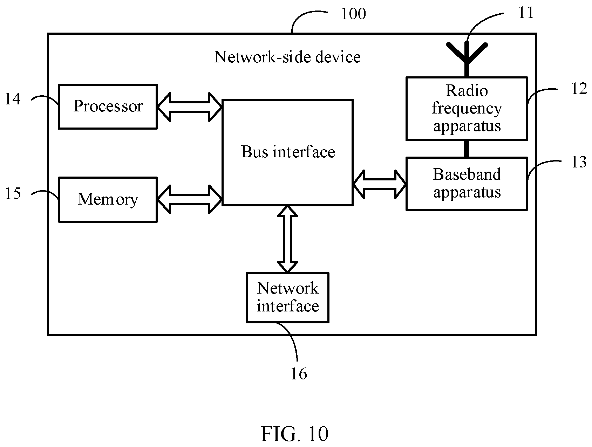

Specifically, embodiments of the present application further provide a network-side device. As shown in FIG. 10, the network-side device 100 includes an antenna 11, a radio frequency apparatus 12, a baseband apparatus 13, a processor 14, and a memory 15. The antenna 11 is connected to the radio frequency apparatus 12. In an uplink direction, the radio frequency apparatus 12 receives information through the antenna 11 and transmits the received information to the baseband apparatus 13 for processing. In a downlink direction, the baseband apparatus 13 processes to-be-transmitted information and transmits the information to the radio frequency apparatus 12. The radio frequency apparatus 12 processes the received information, and transmitted the information out through the antenna 11.

The method performed by the network-side device in the above embodiments may be implemented in the baseband apparatus 13. The baseband apparatus 13 includes a baseband processor.

The baseband apparatus 13 may include, for example, at least one baseband board, where a plurality of chips are provided on the baseband board. As shown in FIG. 10, one of the chips is, for example, a baseband processor, connected to the memory 15 through a bus interface to call a program in the memory 15 and perform the operations of the network device shown in the above method embodiments.

The network-side device may further include a network interface 16, which is, for example, a common public radio interface (Common Public Radio Interface, CPRI).

Specifically, the network-side device 100 in the embodiments of the present application further includes: an instruction or a program stored in the memory 15 and executable on the processor 14. The processor 14 calls the instruction or program in the memory 15 to perform the method performed by the modules shown in FIG. 7, with the same technical effects achieved. To avoid repetition, details are not repeated here.

The radio frequency apparatus 12 may be configured to receive a first signal transmitted by a terminal, where the first signal is determined by the terminal based on first configuration information, and is configured to perform any one of the following: notifying or requesting a network-side device to activate a flexible transmission resource, and notifying or requesting a network-side device to deactivate a flexible transmission resource. The processor 14 may be configured to activate or deactivate the flexible transmission resource based on the first signal.

In a possible implementation, the first configuration information may include at least one of the following: synchronization reference configuration information, where the synchronization reference configuration information is configured to configure a synchronization reference object for a signal; signal form configuration information, where the signal form configuration information is configured to configure the signal as a signal of a first form; resource configuration information, where the resource configuration information is configured to configure resource for the signal; power configuration information, where the power configuration information is configured to configure a power parameter for a signal; configuration information about a number of repetitions, where the repetition configuration information is configured to configure the number of repetitions for signal transmission; and spatial parameter configuration information, where the spatial parameter configuration information is configured to configure a first association relationship between the signal and a second signal.

In a possible implementation, the synchronization reference object may include at least one of the following: an SSB, CSI-RS, and a TRS transmitted on a first carrier; an SSB, CSI-RS, and a TRS transmitted on a second carrier; an SSB, CSI-RS, and a TRS transmitted on an intra-band carrier of a second carrier; an SSB, CSI-RS, and a TRS transmitted on a third carrier; an SSB, CSI-RS, and a TRS transmitted on an intra-band carrier of a third carrier; and GPS timing, where any two of the first carrier, the second carrier, and the third carrier may be the same or different.

In a possible implementation, the signal of the first form may include at least one of the following: a PRACH; an SRS; a PUCCH; a PUSCH; another activation signal for triggering downlink signal transmission or downlink channel transmission; and another on-demand signal.

In a possible implementation, the resource for the signal may include at least one of the following: a time-domain resource, a frequency-domain resource, a sequence resource, and a spatial domain resource.

In a possible implementation, the power parameter may include at least one of the following: an initial power and a power ramping step.

In a possible implementation, the number of repetitions for signal transmission may include at least one of the following: a number of repetitions for each signal transmission, and a maximum number of repetitions for signal transmission.

In a possible implementation, the second signal may include at least one of the following: an SSB, a CSI-RS, an SRS, and a PRACH.

In a possible implementation, configuring the resource for the signal may include at least one of the following: configuring the resource for the signal and the flexible transmission resource to be in a same serving cell; configuring the resource for the signal and the flexible transmission resource to be in different serving cells; configuring the resource for the signal and the flexible transmission resource to be in a same BWP; configuring the resource for the signal and the flexible transmission resource to be in different BWPs; configuring the resource for the signal and the flexible transmission resource to be on a same carrier; configuring the resource for the signal and the flexible transmission resource to be on different carriers; configuring the resource for the signal and the flexible transmission resource to be in a same frequency band; configuring the resource for the signal and the flexible transmission resource to be in different frequency bands; configuring a second association relationship between the resource for the signal and different flexible transmission resources; and configuring the resource for the signal as a resource for activating or deactivating another on-demand signal.

In a possible implementation, the second association relationship may include at least one of the following: an association of the resource for the signal with a cell on which the flexible transmission resource is located; an association of the resource for the signal with a carrier on which the flexible transmission resource is located; an association of the resource for the signal with a frequency band on which the flexible transmission resource is located; an association of the resource for the signal with a type of the flexible transmission resource; an association of the resource for the signal with types of different preamble groups in the flexible transmission resource; and an association of the resource for the signal with different feature combinations of the flexible transmission resource.

In a possible implementation, an association relationship between the resource for the signal and a reference signal may satisfy at least one of the following: the resource for the signal is associated with a same reference signal index; and the resource for the signal is associated with a plurality of reference signal indexes.

In a possible implementation, the first signal may be a PRACH signal. The radio frequency apparatus 12 may be specifically configured to receive the PRACH signal transmitted by the terminal using a PRACH resource, where the PRACH resource may include at least one of the following: a group of PRACH preambles on a first transmission resource; part of the first transmission resource; an additionally independently configured transmission resource; part of specific PRACH preambles on the flexible transmission resource; and part of the flexible transmission resource, where the first transmission resource is a transmission resource other than the flexible transmission resource.

In a possible implementation, the first signal may include at least one of the following: a first time resource and a second time resource that are different from each other, where the first time resource is configured to notify or request the network-side device to activate the flexible transmission resource, and the second time resource is configured to notify or request the network-side device to deactivate the flexible transmission resource; a first frequency-domain resource and a second frequency-domain resource that are different from each other, where the first frequency-domain resource is configured to notify or request the network-side device to activate the flexible transmission resource, and the second frequency-domain resource is configured to notify or request the network-side device to deactivate the flexible transmission resource; a first spatial resource and a second spatial resource that are different from each other, where the first spatial resource is configured to notify or request the network-side device to activate the flexible transmission resource, and the second spatial resource is configured to notify or request the network-side device to deactivate the flexible transmission resource; a first signal sequence and a second signal sequence that are different from each other, where the first signal sequence is configured to notify or request the network-side device to activate the flexible transmission resource, and the second signal sequence is configured to notify or request the network-side device to deactivate the flexible transmission resource; and a third signal and a fourth signal, where the third signal is configured to notify or request the network-side device to activate the flexible transmission resource, and the fourth signal resource is configured to notify or request the network-side device to deactivate the flexible transmission resource.

In the network-side device provided in the embodiments of the present application, the network-side device may activate or deactivate the flexible transmission resource based on the first signal transmitted by the terminal for notifying or requesting the network-side device to activate the flexible transmission resource, or for notifying or requesting the network-side device to deactivate the flexible transmission resource. Accordingly, a specific solution for activating or deactivating the flexible transmission resource is provided.

It may be understood that the implementation processes of the implementations mentioned in this embodiment may refer to the relevant descriptions of the above network-side device method embodiments, with the same or corresponding technical effects achieved. To avoid repetition, details are not repeated here.

Embodiments of the present application further provide a readable storage medium, and a program or an instruction is stored on the readable storage medium. When the program or instruction is executed by a processor, the processes of the above resource processing method embodiments may be implemented, with the same technical effects achieved. To avoid repetition, details are not repeated here.

The processor is a processor in the terminal described in the above embodiments. The readable storage medium includes a computer readable storage medium, such as a computer read-only memory ROM, a random access memory RAM, a magnetic disk, or an optical disk. In some examples, the readable storage medium may be a non-transitory readable storage medium.

Embodiments of the present application further provide a chip. The chip includes a processor and a communication interface, where the communication interface is coupled to the processor, and the processor is configured to run a program or an instruction to implement the processes of the above resource processing method embodiment, with the same technical effects achieved. To avoid repetition, details are not repeated here.

It should be understood that the chip mentioned in the embodiments of the present application may also be called a system-level chip, a system chip, a chip system, or a system on chip, etc.

Embodiments of the present application further provide a computer program/program product. The computer program/program product is stored in a storage medium, and the computer program/program product is executed by at least one processor to implement the processes of the above resource processing method embodiments, with the same technical effects achieved. To avoid repetition, details are not repeated here.

Embodiments of the present application further provide a communication system, including: a terminal and a network-side device. The terminal may be configured to perform the steps of the terminal side method described above, and the network-side device may be configured to perform the steps of the network-side device method described above.

It should be noted that, in this article, the terms "include", "contain" or any other variants thereof are intended to cover non-exclusive inclusion, so that a process, method, article, or apparatus including a series of elements not only includes those elements, but also includes other elements not explicitly listed, or elements inherent to such process, method, article, or apparatus. Without further limitation, an element defined by the statement "including a ..." does not exclude the presence of additional identical elements in the process, method, article, or apparatus including the element. In addition, it should be noted that the scope of the method and apparatus in the implementations of the present application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the descriptions of the foregoing implementations, those skilled in the art may clearly understand that the method in the foregoing embodiment may be implemented by a computer software product in addition to a necessary universal hardware platform or by hardware only. The computer software product is stored in a storage medium (such as a ROM, RAM, a magnetic disk, or an optical disk), and includes several instructions for instructing a terminal or a network-side device to perform the methods described in the embodiments of the present application.

The embodiments of the present application are described above with reference to the accompanying drawings, but the present application is not limited to the foregoing implementations, and the foregoing implementations are only illustrative and not restrictive. Under the enlightenment of the present application, those of ordinary skill in the art may make many forms of implementations without departing from the purpose of the present application and the protection scope of the claims, all of which fall within the protection of the present application.

## Claims

1. A resource processing method, wherein the method comprises:
determining, by a terminal, a first signal based on first configuration information, wherein the first signal is configured to perform any one of the following: notifying or requesting a network-side device to activate a flexible transmission resource, and notifying or requesting a network-side device to deactivate a flexible transmission resource;
transmitting, by the terminal, the first signal to the network-side device.

2. The method according to claim 1, wherein the first configuration information comprises at least one of the following:
synchronization reference configuration information, wherein the synchronization reference configuration information is configured to configure a synchronization reference object for a signal;
signal form configuration information, wherein the signal form configuration information is configured to configure a signal as a signal of a first form;
resource configuration information, wherein the resource configuration information is configured to configure a resource for a signal;
power configuration information, wherein the power configuration information is configured to configure a power parameter for a signal;
configuration information about a number of repetitions, wherein the repetition configuration information is configured to configure the number of repetitions for signal transmission; and
spatial parameter configuration information, wherein the spatial parameter configuration information is configured to configure a first association relationship between a signal and a second signal.

3. The method according to claim 2, wherein the synchronization reference object comprises at least one of the following:
a synchronization signal block SSB, channel state information reference signal CSI-RS, and a tracking reference signal TRS transmitted on a first carrier;
an SSB, CSI-RS, and a TRS transmitted on a second carrier;
an SSB, CSI-RS, and a TRS transmitted on an intra-band carrier of a second carrier;
an SSB, CSI-RS, and a TRS transmitted on a third carrier;
an SSB, CSI-RS, and a TRS transmitted on an intra-band carrier of a third carrier; and
global positioning system GPS timing; wherein
any two of the first carrier, the second carrier, and the third carrier are the same or different.

4. The method according to claim 2, wherein the signal of the first form comprises at least one of the following:
a physical random access channel PRACH;
a channel sounding reference signal SRS;
a physical uplink control channel PUCCH;
a physical uplink shared channel PUSCH;
another activation signal for triggering downlink signal transmission or downlink channel transmission; and
another on-demand signal.

5. The method according to claim 2, wherein the resource for the signal comprises at least one of the following: a time-domain resource, a frequency-domain resource, a sequence resource, and a spatial domain resource.

6. The method according to claim 2, wherein the power parameter comprises at least one of the following: an initial power and a power ramping step.

7. The method according to claim 2, wherein the number of repetitions for signal transmission comprises at least one of the following: a number of repetitions for each signal transmission, and a maximum number of repetitions for signal transmission.

8. The method according to claim 2, wherein the second signal comprises at least one of the following: an SSB, a CSI-RS, an SRS, and a PRACH.

9. The method according to claim 2, wherein the configuring the resource for the signal comprises at least one of the following:
configuring the resource for the signal and the flexible transmission resource to be in a same serving cell;
configuring the resource for the signal and the flexible transmission resource to be in different serving cells;
configuring the resource for the signal and the flexible transmission resource to be in a same bandwidth part BWP;
configuring the resource for the signal and the flexible transmission resource to be in different BWPs;
configuring the resource for the signal and the flexible transmission resource to be on a same carrier;
configuring the resource for the signal and the flexible transmission resource to be on different carriers;
configuring the resource for the signal and the flexible transmission resource to be in a same frequency band;
configuring the resource for the signal and the flexible transmission resource to be in different frequency bands;
configuring a second association relationship between the resource for the signal and different flexible transmission resources; and
configuring the resource for the signal as a resource for activating or deactivating another on-demand signal.

10. The method according to claim 9, wherein the second association relationship comprises at least one of the following:
an association of the resource for the signal with a cell on which the flexible transmission resource is located;
an association of the resource for the signal with a carrier on which the flexible transmission resource is located;
an association of the resource for the signal with a frequency band on which the flexible transmission resource is located;
an association of the resource for the signal with a type of the flexible transmission resource;
an association of the resource for the signal with types of different preamble groups in the flexible transmission resource; and
an association of the resource for the signal with different feature combinations of the flexible transmission resource.

11. The method according to claim 2, wherein an association relationship between the resource for the signal and a reference signal satisfies at least one of the following:
the resource for the signal is associated with a same reference signal index; and
the resource for the signal is associated with a plurality of reference signal indexes.

12. The method according to any one of claims 1 to 11, wherein the first signal is a PRACH signal;
the transmitting, by the terminal, the first signal to the network-side device comprises:
transmitting, by the terminal, the PRACH signal to the network-side device using a PRACH resource; wherein
the PRACH resource comprises at least one of the following:
a group of PRACH preambles on a first transmission resource;
part of a first transmission resource;
an additionally independently configured transmission resource;
part of specific PRACH preambles on a flexible transmission resource; and
part of a flexible transmission resource; wherein
the first transmission resource is a transmission resource other than the flexible transmission resource.

13. The method according to any one of claims 1 to 11, wherein the first signal is configured to notify or request the network-side device to activate the flexible transmission resource;
transmitting, by the terminal, the first signal to the network-side device comprises:
transmitting, by the terminal, the first signal to the network-side device when a first condition is satisfied; wherein
the first condition comprises at least one of the following:
the terminal performs random access on a first transmission resource;
the number of times that the terminal fails to receive a random access response message on a first transmission resource reaches a first number of times;
the terminal measures a reference signal associated with a first transmission resource, and a measured signal quality parameter of the reference signal does not meet a first threshold requirement;
the terminal fails to complete random access after performing a second number of PRACH repetitions on a first transmission resource;
the terminal fails to complete random access after performing two-step random access and four-step random access sequentially;
a historical number of transmissions of the first signal is less than or not greater than a third number of times;
a timing advance TA for the terminal to transmit the first signal is a valid TA;
a duration between a current system time and a time at which the terminal most recently transmitted the first signal is greater than or not less than a first duration;
a power for the terminal to transmit a PRACH signal on a first transmission resource is greater than or not less than a first power threshold;
the terminal receives a random access response message, and a preamble identifier in the random access response message is different from a preamble identifier transmitted by the terminal on a first transmission resource;
the terminal receives a random access response message, a preamble identifier in the random access response message is different from a preamble identifier transmitted by the terminal on a first transmission resource, and a number of random access response messages received by the terminal within a second duration is greater than or not less than a first quantity threshold;
the terminal has triggered transmission of an activation signal or a deactivation signal for network energy saving;
the terminal detects an on-demand signal;
a duration between a current system time and a time at which the terminal most recently transmitted a signal for deactivating the flexible transmission resource is greater than or not less than a third duration; and
a duration of a most recent activation of the flexible transmission resource is greater than or not less than a fourth duration; wherein
the first transmission resource is a transmission resource other than the flexible transmission resource.

14. The method according to any one of claims 1 to 11, wherein the first signal is configured to notify or request the network-side device to deactivate the flexible transmission resource; and
the transmitting, by the terminal, the first signal to the network-side device comprises:
transmitting, by the terminal, the first signal to the network-side device when a second condition is satisfied; wherein
the second condition comprises at least one of the following:
the terminal performs random access on a first transmission resource;
the number of times that the terminal fails to receive a random access response message on a first transmission resource does not reach a first number of times;
the terminal measures a reference signal associated with a first transmission resource, and a measured signal quality parameter of the reference signal meets a first threshold requirement;
the terminal performs a second number of PRACH repetitions on a first transmission resource;
the terminal performs two-step random access but does not trigger four-step random access;
a historical number of transmissions of the first signal is greater than or not less than a third number of times;
a TA for the terminal to transmit the first signal is an invalid TA;
a duration between a current system time and a time at which the terminal most recently transmitted the first signal is less than or not greater than a first duration;
a power for the terminal to transmit a PRACH signal on a first transmission resource is less than or not greater than a first power threshold;
the terminal receives a random access response message, and a preamble identifier in the random access response message is the same as a preamble identifier transmitted by the terminal on a first transmission resource;
the terminal receives a random access response message, a preamble identifier in the random access response message is different from a preamble identifier transmitted by the terminal on a first transmission resource, and a number of random access response messages received by the terminal within a second duration is less than or not greater than a first quantity threshold;
the terminal does not trigger transmission of an activation signal or a deactivation signal for network energy saving;
the terminal does not detect an on-demand signal; and
a duration between a current system time and a time at which the terminal most recently transmitted a signal for activating the flexible transmission resource is greater than or not less than a fifth duration; wherein
the first transmission resource is a transmission resource other than the flexible transmission resource.

15. The method according to claim 1, wherein the first signal comprises at least one of the following:
a first time resource and a second time resource that are different from each other, wherein the first time resource is configured to notify or request the network-side device to activate the flexible transmission resource, and the second time resource is configured to notify or request the network-side device to deactivate the flexible transmission resource;
a first frequency-domain resource and a second frequency-domain resource that are different from each other, wherein the first frequency-domain resource is configured to notify or request the network-side device to activate the flexible transmission resource, and the second frequency-domain resource is configured to notify or request the network-side device to deactivate the flexible transmission resource;
a first spatial resource and a second spatial resource that are different from each other, wherein the first spatial resource is configured to notify or request the network-side device to activate the flexible transmission resource, and the second spatial resource is configured to notify or request the network-side device to deactivate the flexible transmission resource;
a first signal sequence and a second signal sequence that are different from each other, wherein the first signal sequence is configured to notify or request the network-side device to activate the flexible transmission resource, and the second signal sequence is configured to notify or request the network-side device to deactivate the flexible transmission resource; and
a third signal and a fourth signal, wherein the third signal is configured to notify or request the network-side device to activate the flexible transmission resource, and the fourth signal resource is configured to notify or request the network-side device to deactivate the flexible transmission resource.

16. A resource processing method, comprising:
receiving, by a network-side device, a first signal transmitted by a terminal, wherein the first signal is determined by the terminal based on first configuration information, and the first signal is configured to perform any one of the following: notifying or requesting the network-side device to activate a flexible transmission resource, and notifying or requesting a network-side device to deactivate a flexible transmission resource; and
activating or deactivating, by a network-side device, the flexible transmission resource based on the first signal.

17. The method according to claim 16, wherein the first configuration information comprises at least one of the following:
synchronization reference configuration information, wherein the synchronization reference configuration information is configured to configure a synchronization reference object for a signal;
signal form configuration information, wherein the signal form configuration information is configured to configure a signal as a signal of a first form;
resource configuration information, wherein the resource configuration information is configured to configure a resource for a signal;
power configuration information, wherein the power configuration information is configured to configure a power parameter for a signal;
configuration information about a number of repetitions, wherein the repetition configuration information is configured to configure the number of repetitions for signal transmission; and
spatial parameter configuration information, wherein the spatial parameter configuration information is configured to configure a first association relationship between a signal and a second signal.

18. The method according to claim 17, wherein the synchronization reference object comprises at least one of the following:
an SSB, CSI-RS, and a TRS transmitted on a first carrier;
an SSB, CSI-RS, and a TRS transmitted on a second carrier;
an SSB, CSI-RS, and a TRS transmitted on an intra-band carrier of a second carrier;
an SSB, CSI-RS, and a TRS transmitted on a third carrier;
an SSB, CSI-RS, and a TRS transmitted on an intra-band carrier of a third carrier; and
GPS timing; wherein
any two of the first carrier, the second carrier, and the third carrier are the same or different.

19. The method according to claim 17, wherein the signal of the first form comprises at least one of the following:
a PRACH;
an SRS;
a PUCCH;
a PUSCH;
another activation signal for triggering downlink signal transmission or downlink channel transmission; and
another on-demand signal.

20. The method according to claim 17, wherein the resource for the signal comprises at least one of the following: a time-domain resource, a frequency-domain resource, a sequence resource, and a spatial domain resource.

21. The method according to claim 17, wherein the power parameter comprises at least one of the following: an initial power and a power ramping step.

22. The method according to claim 17, wherein the number of repetitions for signal transmission comprises at least one of the following: a number of repetitions for each signal transmission, and a maximum number of repetitions for signal transmission.

23. The method according to claim 17, wherein the second signal comprises at least one of the following: an SSB, a CSI-RS, an SRS, and a PRACH.

24. The method according to claim 17, wherein configuring the resource for the signal comprises at least one of the following:
configuring the resource for the signal and the flexible transmission resource to be in a same serving cell;
configuring the resource for the signal and the flexible transmission resource to be in different serving cells;
configuring the resource for the signal and the flexible transmission resource to be in a same BWP;
configuring the resource for the signal and the flexible transmission resource to be in different BWPs;
configuring the resource for the signal and the flexible transmission resource to be on a same carrier;
configuring the resource for the signal and the flexible transmission resource to be on different carriers;
configuring the resource for the signal and the flexible transmission resource to be in a same frequency band;
configuring the resource for the signal and the flexible transmission resource to be in different frequency bands;
configuring a second association relationship between the resource for the signal and different flexible transmission resources; and
configuring the resource for the signal as a resource for activating or deactivating another on-demand signal.

25. The method according to claim 17, wherein an association relationship between the resource for the signal and a reference signal satisfies at least one of the following:
the resource for the signal is associated with a same reference signal index; and
the resource for the signal is associated with a plurality of reference signal indexes.

26. The method according to any one of claims 16 to 24, wherein the first signal is a PRACH signal;
receiving, by the network-side device, the first signal transmitted by the terminal comprises:
receiving, by the network-side device, the PRACH signal transmitted by the terminal using a PRACH resource; wherein
the PRACH resource comprises at least one of the following:
a group of PRACH preambles on a first transmission resource;
part of a first transmission resource;
an additionally independently configured transmission resource;
part of specific PRACH preambles on a flexible transmission resource; and
part of a flexible transmission resource; wherein
the first transmission resource is a transmission resource other than the flexible transmission resource.

27. The method according to claim 16, wherein the first signal comprises at least one of the following:
a first time resource and a second time resource that are different from each other, wherein the first time resource is configured to notify or request the network-side device to activate the flexible transmission resource, and the second time resource is configured to notify or request the network-side device to deactivate the flexible transmission resource;
a first frequency-domain resource and a second frequency-domain resource that are different from each other, wherein the first frequency-domain resource is configured to notify or request the network-side device to activate the flexible transmission resource, and the second frequency-domain resource is configured to notify or request the network-side device to deactivate the flexible transmission resource;
a first spatial resource and a second spatial resource that are different from each other, wherein the first spatial resource is configured to notify or request the network-side device to activate the flexible transmission resource, and the second spatial resource is configured to notify or request the network-side device to deactivate the flexible transmission resource;
a first signal sequence and a second signal sequence that are different from each other, wherein the first signal sequence is configured to notify or request the network-side device to activate the flexible transmission resource, and the second signal sequence is configured to notify or request the network-side device to deactivate the flexible transmission resource; and
a third signal and a fourth signal, wherein the third signal is configured to notify or request the network-side device to activate the flexible transmission resource, and the fourth signal resource is configured to notify or request the network-side device to deactivate the flexible transmission resource.

28. A resource processing apparatus, wherein the apparatus comprises a determining module and a transmitting module; wherein
the determining module is configured to determine a first signal based on first configuration information, wherein the first signal is configured to perform any one of the following: notifying or requesting a network-side device to activate a flexible transmission resource, and notifying or requesting a network-side device to deactivate a flexible transmission resource; and
the transmitting module is configured to transmit the first signal to the network-side device.

29. A resource processing apparatus, wherein the apparatus comprises a receiving module and a processing module; wherein
the receiving module is configured to receive a first signal transmitted by a terminal, wherein the first signal is determined by the terminal based on first configuration information, and the first signal is configured to perform any one of the following: notifying or requesting a network-side device to activate a flexible transmission resource, and notifying or requesting a network-side device to deactivate a flexible transmission resource; and
the processing module is configured to activate or deactivate the flexible transmission resource based on the first signal.

30. A terminal, comprising a processor and a memory, wherein the memory stores a program or an instruction executable on the processor, and when the program or instruction is executed by the processor, the steps of the resource processing method according to any one of claims 1 to 15 are implemented.

31. A network-side device, comprising a processor and a memory, wherein the memory stores a program or an instruction executable on the processor, and when the program or instruction is executed by the processor, the steps of the resource processing method according to any one of claims 16 to 27 are implemented.

32. A readable storage medium, wherein a program or an instruction is stored on the readable storage medium, and when the program or instruction is executed by a processor, the resource processing method according to any one of claims 1 to 15 is implemented, or the steps of the resource processing method according to any one of claims 16 to 27 are implemented.
